# EUROPÄISCHE PATENTSCHRIFT

(11) **EP 2 414 457 B1**
(45) Veröffentlichungstag und Bekanntmachung des Hinweises auf die Patenterteilung: **09.01.2013**
(21) Anmeldenummer: 10712436.4
(22) Anmeldetag: 01.04.2010
(51) Int. Cl.: C08L 83/02, B01J 20/28, C07F 7/00, C08J 3/20

(54) **VERFAHREN ZUR HERSTELLUNG VON KOMPOSITMATERIALIEN**
METHOD FOR THE PRODUCTION OF COMPOSITE MATERIALS
PROCÉDÉ POUR PRODUIRE DES MATÉRIAUX COMPOSITES

(30) Priorität: 03.04.2009 EP 09157335
(43) Veröffentlichungstag der Anmeldung: 08.02.2012
(73) Patentinhaber: BASF SE, 67056 Ludwigshafen (DE)
(72) Erfinder: KÖNIG, Hannah Maria, 68161 Mannheim (DE); HÄHNLE, Hans-Joachim, 67435 Neustadt (DE); LANGE, Arno, 67098 Bad Dürkheim (DE); NOZARI, Samira, 68161 Mannheim (DE); COX, Gerhard, 67098 Bad Dürkheim (DE); DYLLICK-BRENZINGER, Rainer, 67435 Neustadt (DE); SPANGE, Stefan, 07768 Orlamünde (DE); LÖSCHNER, Tina, 09573 Augustusburg (DE)
(86) Internationale Anmeldenummer: PCT/EP2010/054404
(87) Internationale Veröffentlichungsnummer: WO 2010/112581

(56) Entgegenhaltungen:
- DE-A1-102005 042 138
- DE-A1-102007 063 297
- GRUND S ET AL: "Zwillingspolymerisation: ein Weg zur Synthese von Nanokompositen" ANGEWANDTE CHEMIE, WILEY - V C H VERLAG GMBH & CO. KGAA, WEINHEIM, DE LNKD- DOI:10.1002/ANGE.200504327, Bd. 119, 1. Januar 2007 (2007-01-01), Seiten 636-640, XP002517483 ISSN: 0044-8249 in der Anmeldung erwähnt

## Beschreibung

Die vorliegende Erfindung betrifft ein Verfahren zur Herstellung eines Nanokompositmaterials, das aus
a) wenigstens einer anorganischen oder metallorganischen Phase; und
b) einer organischen Polymerphase aufgebaut ist.

Nanokompositmaterialien, d.h. Verbundstoffe auf Polymerbasis, die in organischen Polymerphase eine anorganische Phase, z.B. eine anorganische (Halb-)Metalloxid-phase mit Abmessungen unterhalb 500 nm, insbesondere unterhalb 100 nm (im Folgenden auch nanoskalige Phase bzw. im Fall einer partikelförmigen Phase nanoskalige Partikel), enthalten, besitzen aufgrund der großen Grenzfläche zwischen der nanoskaligen anorganischen Phase und er organischen Polymerphase ein hohes Potential hinsichtlich ihrer chemischen, physikalischen und mechanischen Eigenschaften, die nicht durch milli- bzw. mikroskalige Dispersionen konventioneller anorganischer Bestandteile in Polymerphasen erreicht werden können (R.P. Singh, et al., J. Mater. Sci. 2002, 37, 781).

Die bislang bekannten Verfahren zur Herstellung von anorganisch-organischen Nanokompositen basieren auf direkter Vermischung von Nanopartikeln oder exfolierten Schichtsilikaten mit einem Polymer in Lösung oder Schmelze, der *in situ* Herstellung der organischen Phase durch Polymerisation organischer Monomere in Gegenwart von anorganischen Nanopartikeln oder exfolierten Schichtsilikaten, Sol-Gel-Techniken und Kombinationen dieser Maßnahmen (Siehe z.B. zur Einarbeitung von Nanopartikeln in eine Polymereschmelze: Garcia, M.; et al., Polymers for Advanced Technologies 2004, 15, 164; zur Polymerisation organischer Monomere in Gegenwart von anorganischen Nanopartikeln oder exfolierten Schichtsilikaten siehe : M. C. Kuo et al., Materials Chemistry and Physics 2005, 90(1), 185; A. Maity et al., Journal of Applied Polymer Science 2004, 94(2), 803; Y. Liao et al. (Polymer International 2001, 50(2), 207; sowie WO 2001/012678; zur Herstellung einer Oxid-Phase durch Hydrolyse von oligomeren Alkoxysiloxanen in einer Polymerlösung oder Schmelze siehe WO 2004/058859 und WO2007/028563).

Die etablierten Methoden des Standes der Technik sind mit einer Reihe von Nachteilen verbunden. Zum einen bleiben sie vielfach auf Komposite von organischen Polymeren beschränkt, die entweder in organischen Lösungsmitteln löslich sind oder unzersetzt schmelzen. Zudem lassen sich auf diese Weise in der Regel nur geringe Mengen an anorganischer Phase in das Nanokompositmaterial einbringen. Aufgrund der meist hohen Agglomeration der Nanopartikel und der dadurch notwendigen enorm hohen Scherkräfte ist eine Feinverteilung der Nanopartikel in größerer Menge kaum möglich. Ein großer Nachteil der Nanokomposit-Herstellung durch in-situ-Herstellung der organischen Polymerphase in Gegenwart von Nanopartikeln ist die dabei auftretende Agglomeratbildung der Nanopartikel, so dass inhomogene Produkte entstehen. Dadurch kann der Vorteil der Nanopartikel, durch ihre große Oberfläche ausgedehnte Grenzflächen mit dem Polymer zu bilden, nicht genutzt werden. Beim Einsatz pulvriger Nanofüllstoffe besteht aufgrund der geringen Partikelgröße zusätzlich ein hohes Gesundheitsrisiko während der Compoundierung aufgrund der auftretenden Staubbildung und der Lungengängigkeit der Nanopartikel. Die in-situ-Herstellung der anorganischen Phase durch einen Sol-Gel-Prozess in einer Polymerschmelze oder Lösung führt in der Regel zu schlecht reproduzierbaren Ergebnissen oder bedarf aufwändiger Maßnahmen zur Kontrolle der Hydrolysebedingungen.

Spange et al., Angew. Chem. Int. Ed., 46 (2007) 628-632 beschreiben einen neuartigen Zugang zu Nanokompositmaterialien durch kationische Polymerisation von Tetrafurfuryloxysilan TFOS und Difurfuryloxydimethylsilan gemäß den folgenden Schemata:

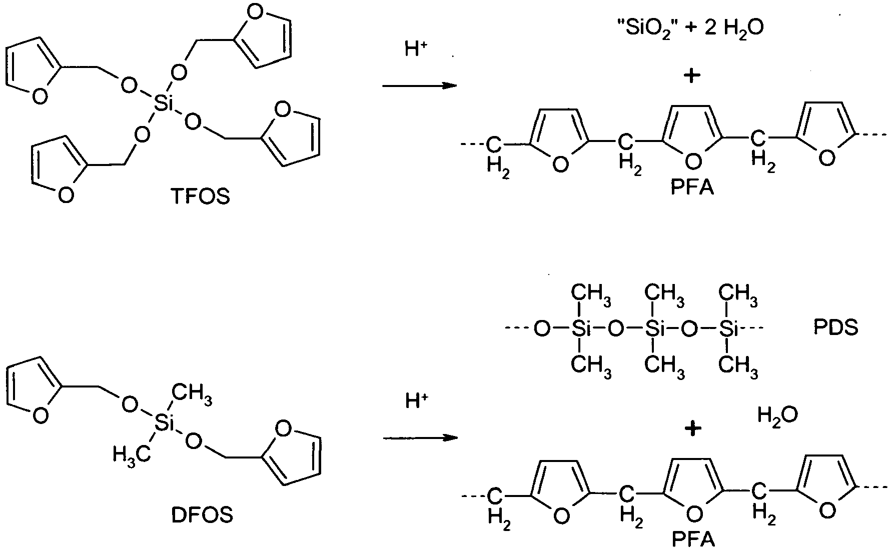

Spange et al. schlagen für diese Art der Polymerisation den Begriff Zwillingspolymerisation vor.

Bei der Polymerisation von TFOS unter kationischen Bedingungen wird ein Komposit-Material gebildet, das eine Siliziumdioxid-Phase und eine organische Polymerphase aus Polyfurfurylalkohol PFA aufweist. Die die Abmessungen der Phasendomänen in dem so erhaltenen Komposit-Material liegen im Bereich weniger Nanometer. Zudem weisen die Phasendomänen der Siliziumdioxid-Phase und die Phasendomänen der PFA-Phase eine co-kontinuierliche Anordnung auf, d.h. sowohl die PFA-Phase als auch die SiO₂ Phase durchdringen sich gegenseitig und bilden im wesentlichen keine diskontinuierlichen Bereiche aus. Die Abstände zwischen benachbarten Phasengrenzen, bzw. die Abstände zwischen den Domänen benachbarter identischer Phasen sind äußerst gering und liegen im Mittel bei maximal 10 nm. Eine makroskopisch sichtbare Trennung in diskontinuierliche Domänen der jeweiligen Phase tritt nicht auf.

Man nimmt an, dass die spezielle Phasenanordnung und die geringen Abstände benachbarter Phasen eine Folge der kinetischen Kopplung der Polymerisation der Furfuryleinheiten einerseits und der Bildung der des Siliziumdioxids andererseits ist. Infolgedessen bilden sich die Phasenbestandteile mehr oder weniger synchron und es findet bereits während der Polymerisation des TFOS eine Phasenseparation in die anorganische Phase und die organische Phase statt.

Bei der Polymerisation von DFOS hingegen wird keine Bildung eines Kompositmaterials beobachtet. Vielmehr wird PFA und oligomeres Dimethylsiloxan gebildet, das sich als Öl abscheidet.

Zwar löst die von Spange et als beschriebene Zwillingspolymerisation eine Reihe von Problemen bei der Herstellung von Nanokompositmaterialien und vermeidet insbesondere den Einsatz von Nanomaterialien. Die von Spange et al. beschriebenen Nanokompositmaterialien sind jedoch in verschiedener Hinsicht nicht zufriedenstellend und weisen eine nur mäßige Festigkeit und sind vergleichsweise spröde.

Es wurde gefunden, dass die Zwillingspolymerisation ein neuartiges Polymerisationsprinzip ist, das auch auf andere Monomere übertragen werden kann. Unter einer Zwillingspolymerisation versteht man im sinne dieser Erfindung die Polymerisation eines Monomeren (so genanntes Zwillingsmonomer), das
- wenigstens eine erste polymerisierbare Monomereinheit A, welche ein Metall oder Halbmetall M enthält (im TFOS die SiO₄-Einheit), und
- wenigstens eine zweite polymerisierbare organische Monomereinheit B aufweist (im TFOS die Furfurylreste), die über eine kovalente chemische Bindung mit der polymerisierbaren Einheit A verbunden ist,
unter Polymerisationsbedingungen, unter denen sowohl die polymerisierbare Monomereinheit A als auch die polymerisierbare Einheit B unter Bruch der Bindung zwischen A und B polymerisieren. Dementsprechend sind die polymerisierbaren Einheiten A und B so gewählt, dass sie unter den gleichen Bedingungen polymerisieren.

So beschreibt die frühere Patentanmeldung PCT/EP 2008/010169 der Anmelderin eine Zwillingspolymerisation von gegebenenfalls substituiertem 2,2'-Spiro[4H-1,3,2-benzodioxasilin] (im Folgenden SPISI) unter kationischen Polymerisationsbedingungen zu einem Nanokompositmaterial, das eine organische Phenol-Formaldehyd-Polymerphase und eine Siliziumdioxid Phase umfasst und die von Spange beschriebenen Eigenschaften aufweist.

Es wurde überraschenderweise auch gefunden, dass sich solche Zwillingsmonomere in einer Zwillingspolymerisation copolymerisieren lassen, wobei Nanokompositmaterial mit einer Anordnung der Phasendomänen ähnlich der in Nanokompositmaterialien, welche durch Homopolymerisation von SPIS oder TFOS erhältlich sind. Es ist bereits überraschend, dass auch im Gemisch von Zwillingsmonomeren praktisch vollständige Polymerisation stattfindet, da man erwarten würde, dass die kinetisch anspruchsvollen Mechanismen der Einzelmonomere sich gegenseitig beeinflussen und zu einem vorzeitigem Abbruch oder Ausbleiben der Polymerisation führen. Darüber hinaus weisen auch hier die Phasendomänen eine co-kontinuierliche Anordnung sowie Abmessungen im Bereich weniger Nanometer (Abstand zwischen benachbarten identischen Phasen) auf. Dies ist insofern überraschend, weil man davon ausgehen musste, dass die Anordnung der Phasendomänen in den durch Homopolymerisation von TFOS oder SPISI erhaltenen Kompositmaterialien auf die kinetische Kopplung der Polymerisation des organischen Molekülteils und der anorganischen Komponente beruht. Da eine solche Kopplung zwischen den Comonomeren fehlt, hätte man erwartet, dass bei der Copolymerisation von Zwillingsmonomeren eine sehr viel ausgeprägtere Separation der Phasendomänen auftritt und kein einheitliches Kompositmaterial erhalten wird.

Die Phasenanordnung bleibt überraschenderweise auch dann erhalten, wenn man ein Zwillingsmonomer mit einem konventionellen Monomer, d.h. einem Monomer, das keine Monomereinheit A aufweist, copolymerisiert, wenn das konventionelle Monomer mit der Monomereinheit B des Zwillingsmonomers copolymerisierbar ist.

Dementsprechend betrifft die vorliegende Erfindung Verfahren zur Herstellung eines Nanokompositmaterials aus
a) wenigstens einer anorganischen oder metallorganischen Phase; und
b) einer organischen Polymerphase;
umfassend die Polymerisation wenigstens eines Monomers, das
- wenigstens eine erste polymerisierbare Monomereinheit A, welche ein Metall oder Halbmetall M enthält, und
- wenigstens eine zweite polymerisierbare organische Monomereinheit B aufweisen, die über eine kovalente chemische Bindung mit der polymerisierbaren Einheit A verbunden ist, (Zwillingsmonomer)
unter Polymerisationsbedingungen, unter denen sowohl die polymerisierbare Monomereinheit A als auch die polymerisierbare Einheit B unter Bruch der Bindung zwischen A und B polymerisieren,
wobei die zu polymerisierenden Monomere ein erstes Zwillingsmonomer M1 und wenigstens ein zweites Zwillingsmonomer M2 umfassen, das sich zumindest in einer der Monomereinheiten A oder B von dem Monomer M1 unterscheidet (Ausführungsform 1), oder
wobei die zu polymerisierenden Monomere neben dem wenigstens einen Zwillingsmonomer wenigstens ein weiteres, von den Zwillingsmonomeren verschiedenes Monomer M', d.h. ein konventionelles Monomer ohne Monomereinheit A, umfassen, das mit der Monomereinheit B des Zwillingsmonomers copolymerisierbar ist (Ausführungsform 2).

Das erfindungsgemäße Verfahren ist mit einer Reihe von Vorteilen verbunden. Zum einen erlaubt das erfindungsgemäße Verfahren durch Wahl geeigneter Co-Monomere die gezielte Modifizierung der stofflichen Eigenschaften des danach erhältlichen Kompositmaterials. So kann man beispielsweise die anorganische Polymerphase in ihren Eigenschaften dadurch modifizieren, dass man Zwillingsmonomere miteinander copolymerisiert, die sich in der Art der copolymerisierbaren Einheit A unterscheiden. In analoger Weise kann man beispielsweise die organische Polymerphase in ihren Eigenschaften dadurch modifizieren, dass man Zwillingsmonomere miteinander copolymerisiert, die sich in der Art der copolymerisierbaren Einheit B unterscheiden. Außerdem kann man die organische Polymerphase modifizieren, indem man ein konventionelles Co-Monomer mit polymerisiert. Auf diese Weise kann man beispielsweise eine Vernetzung der Polymerphase erreichen. Ebenso kann man beispielsweise die organische und die anorganische Polymerphase in ihren Eigenschaften dadurch modifizieren, dass man Zwillingsmonomere miteinander copolymerisiert, die sich sowohl in der Art der polymerisierbaren Einheit A als auch in der Art der polymerisierbaren Einheit B unterscheiden.

Überraschenderweise führt eine solche Modifizierung nicht zur Zerstörung der Domänenanordnung. Zudem zeichnen sich die erfindungsgemäß erhältlichen Kompositmaterialien durch vorteilhafte mechanische Eigenschaften, insbesondere durch eine geringere Sprödigkeit und höhere Zähigkeit bzw. Elastizität und/oder durch höhere Festigkeiten aus.

Dementsprechend betrifft die vorliegende Erfindung auch das nach dem erfindungsgemäßen Verfahren erhältliche Nanokompositmaterial.

Das erfindungsgemäße Verfahren eignet sich insbesondere zur Zwillingspolymerisation solcher Monomere, worin die Monomereinheit A ein Metall oder Halbmetall enthält, das unter den Metallen und Halbmetallen der 3. Hauptgruppe (Gruppe 3 nach IUPAC), insbesondere B oder Al, Metallen und Halbmetallen der 4. Hauptgruppe des Periodensystems (Gruppe 14 nach IUPAC), insbesondere Si, Ge, Sn oder Pb, Halbmetallen der 5. Hauptgruppe des Periodensystems (Gruppe 15 nach IUPAC), insbesondere As, Sb und Bi, Metallen der 4. Nebengruppe des Periodensystems, insbesondere Ti, Zr und Hf, und Metallen der 5. Nebengruppe des Periodensystems wie V ausgewählt ist. Das erfindungsgemäße Verfahren ist insbesondere zur Zwillingspolymerisation solcher Monomere geeignet, worin die Monomereinheit A ein Metall oder Halbmetall enthält, das unter den Metallen und Halbmetallen der 4. Hauptgruppe des Periodensystems, insbesondere Si, Ge, Sn oder Pb und Metallen der 4. Nebengruppe des Periodensystems, insbesondere Ti, Zr und Hf, ausgewählt ist. Das erfindungsgemäße Verfahren ist besonders bevorzugt zur Zwillingscopolymerisation solcher Monomere geeignet, worin in wenigstens einem der Monomere die Monomereinheit A ein Metall oder Halbmetall enthält, das unter Si und Ti ausgewählt ist. Das erfindungsgemäße Verfahren ist ganz besonders bevorzugt zur Zwillingspolymerisation solcher Monomere geeignet, worin zumindest in einem Teil oder der Gesamtmenge der Monomere die Monomereinheit A im wesentlichen ausschließlich Silizium enthält. In einer ganz besonders bevorzugten Ausführungsform sind wenigstens 90 mol-% und insbesondere die Gesamtmenge der in den Zwillingsmonomeren enthaltenen Metalle bzw. Halbmetalle Silizium. In einer ebenfalls ganz besonders bevorzugten Ausführungsform sind wenigstens 90 mol-% und insbesondere die Gesamtmenge der in den Zwillingsmonomeren enthaltenen Metalle bzw. Halbmetalle Bor. In einer ebenfalls besonders bevorzugten Ausführungsform sind wenigstens 90 mol-% und insbesondere die Gesamtmenge der in den Zwillingsmonomeren enthaltenen Metalle bzw. Halbmetalle unter Kombinationen von Silizium mit wenigstens einem weiteren Metallatom, insbesondere Titan oder Zinn, speziell Titan, ausgewählt. Hierbei liegt das Molverhältnis von Silizium zu dem weiteren Metallatom vorzugsweise im Bereich von 10:1 bis 1:10 und speziell im Bereich von 1:5 bis 5:1.

Gemäß der erfindungsgemäßen Ausführungsform 1 umfassen die zu polymerisierenden Monomere M ein erstes Monomer M1 und wenigstens ein zweites Monomer M2, das sich zumindest in einer der Monomereinheiten A oder B von dem Monomer M1 unterscheidet.

Gemäß einer bevorzugten Ausgestaltung der Ausführungsform 1 unterscheiden sich die Monomere M1 und M2 in der Art der Monomereinheit A.

Ein solcher Unterschied kann die Art des Metalls bzw. Halbmetalls in der Monomereinheit A sein: Beispielsweise kann man Zwillingsmonomere miteinander copolymerisieren, in denen das eine Monomer (Monomer M1) Silizium als Halbmetall enthält und das zweite Monomer M2 ein Metall oder Halbmetall enthält, das unter einem von Silizium verschiedenen Metall oder Halbmetall ausgewählt ist, z.B. ein Metall der 4. Nebengruppe des Periodensystem wie Ti, Zr oder Hf, speziell Ti. Ebenfalls kann man Zwillingsmonomere miteinander copolymerisieren, in denen das eine Monomer (Monomer M1) Silizium als Halbmetall enthält und das zweite Monomer M2 ein Metall oder Halbmetall enthält, das unter einem Metall oder Halbmetall der 3. Hauptgruppe des Periodensystems ausgewählt ist, z.B. Bor oder Aluminium, speziell Bor. Ebenfalls kann man Zwillingsmonomere miteinander copolymerisieren, in denen das eine Monomer (Monomer M1) Silizium als Halbmetall enthält und das zweite Monomer M2 ein Metall oder Halbmetall enthält, das unter einem von Si verschiedenen Metall oder Halbmetall der 4. Hauptgruppe des Periodensystems ausgewählt ist, z.B. Zinn oder Germanium, speziell Zinn.

Ein solcher Unterschied kann auch die Art des bzw. der Liganden des Metalls bzw. Halbmetalls in den Zwillingsmonomeren sein, die an der Polymerisation der organischen Phase nicht involviert sind. Weist beispielsweise das Metall oder Halbmetall, speziell Silizium, in der Monomereinheit A des Monomers M2 unter Polymerisationsbedingungen inerte anorganische oder organische Liganden auf, die unter Polymerisationsbedingungen nicht abgespalten werden, z.B. über Kohlenstoff oder Stickstoff gebundene inerte Kohlenwasserstoff-Reste wie Alkyl, Cycloalkyl oder ggf. substituiertes Phenyl, dann werden diese inerten Reste Bestandteil der anorganischen bzw. metallorganischen Phase. Bei der Copolymerisation eines solchen Monomers M2 mit einem Monomer M1, das keine solchen Liganden am (Halb-)Metallatom der Monomereinheit A trägt, sondern vielmehr ausschließlich Liganden, welche die polymerisierbare Einheit B bilden und die vorzugsweise über Sauerstoff gebunden sind, dann entsteht in der Regel eine anorganische Mischphase oder ein Gemisch aus zweier anorganischer bzw. metallorganischer Phasen mit typischerweise oxidischen (oder nitridischen oder sulfidischen) Bestandteilen, die aus dem Monomer M1 resultieren, sowie oxidischen, sulfidischen, nitridischen oder metallorganischen Bestandteilen, die aus dem Monomer M2 resultieren. Steht beispielsweise das (Halb-)Metallatom im Monomer M1 für Silizium oder Titan, das ausschließlich über Sauerstoff gebundene Gruppen B aufweist und das (Halb-)Metallatom im Monomer M2 für Silizium, das neben den Gruppen B, die vorzugsweise über Sauerstoff gebunden sind, auch inerte über Kohlenstoff gebundene Liganden trägt, dann bilden sich bei der Polymerisation neben Siliziumdioxid oder Titandioxid auch Polysiloxane oder ein mit Siloxan-Einheiten modifiziertes Siliziumdioxid bzw. Titandioxid.

Gemäß einer weiteren bevorzugten Ausgestaltung der Ausführungsform 1 unterscheiden sich die Monomere M1 und M2 in der Art der Monomereinheit B. Auf diese Weise erhält man Kompositmaterialien, die bezüglich der organischen Polymerphase modifiziert sind. Weisen beispielsweise die Monomere M1 und M2 jeweils Monomereinheiten B1 bzw. B2 auf, die miteinander copolymerisierbar sind, dann bildet sich bei der Zwillingspolymerisation ein Copolymer, das aus den Monomereinheiten B1 und B2 aufgebaut ist. Sind die Monomereinheiten B1 und B2 nicht miteinander copolymerisierbar, bildet sich bei der Zwillingscopolymerisation in der organischen Polymerphase ein Blend aus zwei voneinander verschiedenen Polymeren aus, die miteinander innigst vermischt sind, wobei das eine Polymer im wesentlichen aus den Monomereinheiten B1 und das andere Polymer im wesentlichen aus den Monomereinheiten B2 aufgebaut ist.

In der Ausführungsform 1 liegt das Molverhältnis von Monomer M1 zu dem wenigstens einen weiteren Monomer M2 in der Regel im Bereich von 5 : 95 bis 95 : 5, vorzugsweise im Bereich von 10:90 bis 90:10, insbesondere im Bereich von 15:85 bis 85:15 und speziell im Bereich von 20:80 bis 80:20.

Gemäß der erfindungsgemäßen Ausführungsform 2 umfassen die zu polymerisierenden Monomere neben dem wenigstens einen Zwillingsmonomer wenigstens ein weiteres, von den Zwillingsmonomeren verschiedenes Monomer M' (Comonomer M'), d.h. ein konventionelles Monomer ohne Monomereinheit A, das mit der Monomereinheit B copolymerisierbar ist. Auf diese Weise bildet sich bei der Zwillingspolymerisation ein Copolymer, das aus den Monomereinheiten B und dem Comonomer M' aufgebaut ist. Ein solches Comonomer kann beispielsweise Formaldehyd oder ein Formaldehyd-Precursor wie Paraformaldehyd, Dimethoxymethan oder Trioxan sein, insbesondere wenn die Monomereinheit B eine gegebenenfalls substituierte Benzyl-, Furfuryl- oder Thienylmethyl-Einheit ist.

Verbindungen, die als Zwillingsmonomere geeignet sind, sind aus dem Stand der Technik bekannt oder können in analoger Weise zu den dort beschriebenen Methoden hergestellt werden. An dieser Stelle sei beispielsweise verwiesen auf die eingangs zitierte Literatur sowie auf:
- Silylenolether (Chem. Ber. 119, 3394 (1986); J. Organomet. Chem. 244, 381 (1981); JACS 112, 6965 (1990))
- Cycloboroxane (Bull. Chem. Soc. Jap. 51, 524 (1978); Can. J. Chem. 67,1384 (1989); J. Organomet. Chem. 590, 52 (1999))
- Cyclosilikate und -germanate (Chemistry of Heterocyclic Compounds, 42, 1518, (2006); Eur. J. Inorg. Chem. (2002), 1025; J. Organomet. Chem. 1, 93 (1963); J. Organomet. Chem. 212, 301 (1981); J. Org. Chem. 34, 2496 (1968); Tetrahedron 57, 3997 (2001) sowie die älteren Internationalen Anmeldungen WO 2009/083082 und WO2009/083083)
- Cyclostannane (J. Organomet. Chem. 1, 328 (1963))
- Cyclozirkonate (JACS 82, 3495 (1960)).

Bevorzugte Zwillingsmonomere, wie sie in der Zwillingspolymerisation eingesetzt werden, lassen sich durch die allgemeine Formel I beschreiben: 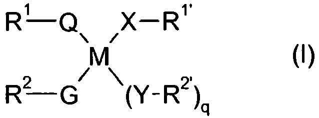 worin
- M: für ein Metall oder Halbmetall steht, vorzugsweise ein Metall oder Halbmetall der 3. oder 4. Hauptgruppe oder der 4. oder 5. Nebengruppe des Periodensystems, insbesondere B, Al, Si, Ti, Zr, Hf, Ge, Sn, Pb, V, As, Sb oder Bi, besonders bevorzugt B, Si, Ti, Zr oder Sn, ganz besonders bevorzugt Si oder Ti und speziell Si;
- R¹, R²: gleich oder verschieden sein können und jeweils für einen Rest Ar-C(R^{a},R^{b})- stehen, worin Ar für einen aromatischen oder heteroaromatischen Ring steht, der gegebenenfalls 1 oder 2 Substituenten aufweist, die unter Halogen, CN, C₁-C₆-Alkyl, C₁-C₆-Alkoxy und Phenyl ausgewählt sind und R^{a}, R^{b} unabhängig voneinander für Wasserstoff oder Methyl stehen oder gemeinsam ein Sauerstoffatom oder eine Methylidengruppe (=CH₂) bedeuten und insbesondere beide für Wasserstoff stehen, oder die Reste R¹Q und R²G zusammen für einen Rest der Formel A 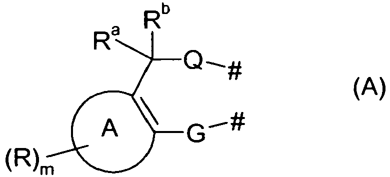 stehen, worin A für einen an die Doppelbindung kondensierten aromatischen oder heteroaromatischen Ring steht, m für 0, 1 oder 2 steht, die Reste R gleich oder verschieden sein können und unter Halogen, CN, C₁-C₆-Alkyl, C₁-C₆-Alkoxy und Phenyl ausgewählt sind und R^{a}, R^{b} die zuvor genannten Bedeutungen aufweisen; G für O, S oder NH steht und insbesondere O bedeutet; Q für O, S oder NH steht und insbesondere O bedeutet;
- q: entsprechend der Wertigkeit oder Ladung von M für 0, 1 oder 2 und insbesondere für 1 steht,
- X, Y: gleich oder verschieden sein können und jeweils für O, S, NH oder eine chemische Bindung stehen und insbesondere Sauerstoff oder eine chemische Bindung bedeuten;
- R^{1'}, R^{2'}: gleich oder verschieden sein können und jeweils für C₁-C₆-Alkyl, C₃-C₆-Cycloalkyl, Aryl oder einen Rest Ar'-C(R^{a'},R^{b'})- stehen, worin Ar' die für Ar angegebenen Bedeutungen hat und R^{a'}, R^{b'} die für R^{a}, R^{b} angegebenen Bedeutungen aufweisen und insbesondere für Wasserstoff stehen, oder R^{1'}, R^{2'} gemeinsam mit X und Y für einen Rest der Formel A, wie zuvor definiert, stehen.

Für die Zwillingscopolymerisation sind auch Monomere der Formel I geeignet, worin M, R¹, R², G, Q, q, Y und R^{2'} die zuvor genannten Bedeutungen aufweisen, worin der Rest R^{1'} für einen Rest der Formel: 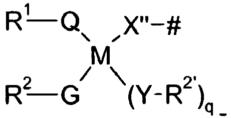 steht, worin q, R¹, R², R^{2'}, Y, Q und G die zuvor genannten Bedeutungen haben, X" eine der für Q genannten Bedeutungen hat und insbesondere für Sauerstoff steht, und # die Bindung an M bedeutet. Hierunter sind solche Monomere bevorzugt, worin M, R¹, R², G, Q, q, Y und R^{2'} die als bevorzugt angegebenen Bedeutungen aufweisen, insbesondere solche, worin die Reste R¹Q und R²G zusammen für einen Rest der Formel A stehen.

Für die Zwillingscopolymerisation sind auch Monomere geeignet, die sich von den Monomeren der Formel I ableiten, worin M für Ti oder Zr steht, q = 1 ist und Q und G Sauerstoff bedeuten, und zwar dergestalt, dass es sich hierbei um µ-oxido-verbrückte Oligomere, z.B. Tetramere, handelt.

In den Monomeren der Formel I bilden die den Resten R¹ und R²G entsprechenden Molekülteile polymerisierbare Einheit(en) B. Wenn X und Y von einer chemischen Bindung verschieden sind und R^{1'}X und R^{2'} nicht für inerte Reste wie C₁-C₆-Alkyl, C₃-C₆-Cycloalkyl oder Aryl stehen, bilden die Reste R^{1'}X und R^{2'}Y ebenfalls polymerisierbare Einheit(en) B. Hingegen bildet das Metallatom M, gegebenenfalls zusammen mit den Gruppen Q und Y, den Hauptbestandteil der Monomereinheit A.

Unter einem aromatischen Rest bzw. Aryl versteht man im Sinne der Erfindung einen carbocyclischen aromatischen Kohlenwasserstoff-Rest wie Phenyl oder Naphthyl.

Unter einem heteroaromatischen Rest bzw. Hetaryl versteht man im Sinne der Erfindung einen heterocyclischen aromatischen Rest, der in der Regel 5 oder 6 Ringglieder aufweist, wobei eines der Ringglieder ein Heteroatom ist, das unter Stickstoff, Sauerstoff und Schwefel ausgewählt ist, und gegebenenfalls 1 oder 2 weitere Ringlieder ein Stickstoffatom sein können und die verbleibenden Ringglieder Kohlenstoff sind. Beispiele für heteroaromatische Reste sind Furyl, Thienyl, Pyrrolyl, Pyrazolyl, Imidazolyl, Oxazolyl, Isoxazolyl, Pyridyl oder Thiazolyl.

Unter einem kondensierten aromatischen Rest bzw. Ring versteht man im Sinne der Erfindung einen carbocyclischen aromatischen, zweiwertigen Kohlenwasserstoff-Rest wie o-Phenylen (Benzo) oder 1,2-Naphthylen (Naphtho).

Unter einem kondensierten heteroaromatischen Rest bzw. Ring versteht man im Sinne der Erfindung einen heterocyclischen aromatischen Rest wie zuvor definiert, worin zwei benachbarte C-Atome die Formel A bzw. in den Formeln II und III dargestellte Doppelbindung bilden.

Gemäß einer ersten Ausführungsform der Monomere der Formel I stehen die Gruppen R¹Q und R²G gemeinsam für einen Rest der Formel A wie zuvor definiert, insbesondere für einen Rest der Formel Aa: 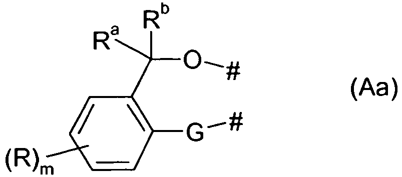 worin #, m, R, R^{a} und R^{b} die zuvor genannten Bedeutungen aufweisen. In den Formeln A und Aa steht die Variable m insbesondere für 0. Sofern m für 1 oder 2 steht, bedeutet R insbesondere eine Methyl- oder Methoxygruppe. In den Formeln A und Aa stehen R^{a} und R^{b} insbesondere für Wasserstoff. In Formel A steht Q insbesondere für Sauerstoff. In den Formeln A und Aa steht G insbesondere für Sauerstoff oder NH, insbesondere für Sauerstoff.

Unter den Zwillingsmonomeren der ersten Ausführungsform sind insbesondere solche Monomere der Formel I bevorzugt, worin q = 1 ist und worin die Gruppen X-R^{1'} und Y-R^{2'} gemeinsam für einen Rest der Formel A, insbesondere für einen Rest der Formel Aa stehen. Derartige Monomere lassen sich durch die folgenden Formeln II bzw. IIa beschreiben:

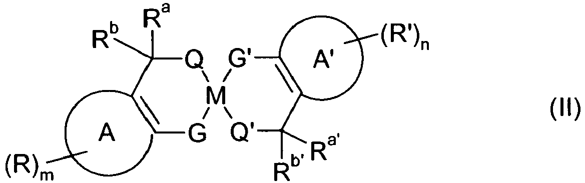

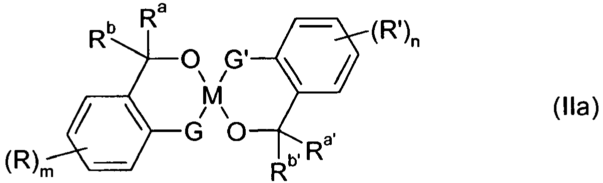

Unter den Zwillingsmonomeren der ersten Ausführungsform sind weiterhin solche Monomere der Formel I bevorzugt, worin q für 0 oder 1 steht und worin die Gruppe X-R^{1'} für einen Rest der Formel A' oder Aa' steht: 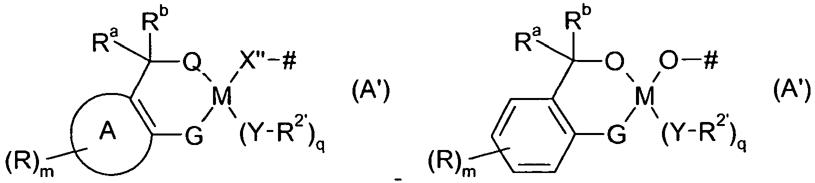 worin m A, R, R^{a}, R^{b}, G, Q, X", Y, R^{2'} und q die zuvor genannten, insbesondere die als bevorzugt genannten Bedeutungen aufweisen.

Derartige Monomere lassen sich durch die folgenden Formeln II' bzw. IIa' beschreiben:

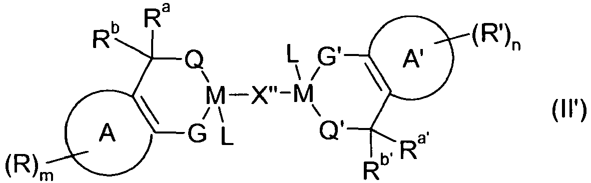

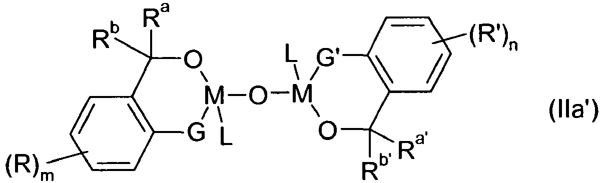

In den Formeln II und II' haben die Variablen die folgenden Bedeutungen:
- M: steht für ein Metall oder Halbmetall, vorzugsweise ein Metall oder Halbmetall der 3. oder 4. Hauptgruppe oder der 4. oder 5. Nebengruppe des Periodensystems, insbesondere B, Al, Si, Ti, Zr, Hf, Ge, Sn, Pb, V, As, Sb oder Bi, besonders bevorzugt B, Si, Ti, Zr oder Sn, speziell Si;
- A, A': stehen unabhängig voneinander für einen an die Doppelbindung kondensierten aromatischen oder heteroaromatischen Ring;
- m, n: stehen unabhängig voneinander für 0, 1 oder 2, insbesondere für 0;
- G, G': stehen unabhängig voneinander für O, S oder NH, insbesondere O oder NH und speziell für O;
- Q, Q': stehen unabhängig voneinander für O, S oder NH, insbesondere für O;
- R, R': sind unabhängig voneinander unter Halogen, CN, C₁-C₆-Alkyl, C₁-C₆-Alkoxy und Phenyl ausgewählt und stehen insbesondere jeweils für Methyl oder Methoxy;
- R^{a}, R^{b}, R^{a'}, R^{b'}: sind unabhängig voneinander ausgewählt unter Wasserstoff und Methyl oder R^{a} und R^{b} und/oder R^{a} und R^{b'} stehen jeweils gemeinsam für ein Sauerstoffatom oder =CH₂; insbesondere stehen R^{a}, R^{b}, R^{a'}, R^{b'} jeweils für Wasserstoff,
- L: steht für eine Gruppe (Y-R^{2'})_{q}, worin Y, R^{2'} und q die zuvor genannten Bedeutungen aufweisen und
- X": hat eine der für Q genannten Bedeutungen und steht insbesondere für Sauerstoff.

In den Formeln IIa und IIa' haben die Variablen die folgenden Bedeutungen:
   - M: steht für ein Metall oder Halbmetall, vorzugsweise ein Metall oder Halbmetall der 3. oder 4. Hauptgruppe oder der 4. oder 5. Nebengruppe des Periodensystems, insbesondere B, Al, Si, Ti, Zr, Hf, Ge, Sn, Pb, V, As, Sb oder Bi, besonders bevorzugt B, Si, Ti, Zr oder Sn, speziell Si;
   - m, n: stehen unabhängig voneinander für 0, 1 oder 2, insbesondere für 0;
   - G, G': stehen unabhängig voneinander für O, S oder NH, insbesondere O oder NH und speziell für O;
   - R, R': sind unabhängig voneinander unter Halogen, CN, C₁-C₆-Alkyl, C₁-C₆-Alkoxy und Phenyl ausgewählt und stehen insbesondere jeweils für Methyl oder Methoxy;
   - R^{a}, R^{b}, R^{a'}, R^{b'}: sind unabhängig voneinander ausgewählt unter Wasserstoff und Methyl oder R^{a} und R^{b} und/oder R^{a} und R^{b'} stehen jeweils gemeinsam für ein Sauerstoffatom oder =CH₂; insbesondere stehen R^{a}, R^{b}, R^{a'}, R^{b'} jeweils für Wasserstoff,
   - L: steht für eine Gruppe (Y-R^{2'})_{q}, worin Y, R^{2'} und q die zuvor genannten Bedeutungen aufweisen.

Ein Beispiel für ein Monomer der Formel II bzw. IIa ist 2,2'-Spirobis[4H-1,3,2-benzodioxasilin] (Verbindung der Formel IIa mit M = Si, m = n = 0, G = O, R^{a} = R^{b} = R^{a'} = R^{b'} = Wasserstoff). Derartige Monomere sind aus der älteren Internationalen Patentanmeldung WO2009/083082 und PCT/EP 2008/010169 [WO2009/083083] bekannt oder können nach den dort beschriebenen Methoden hergestellt werden. Ein weiteres Beispiel für ein Monomere IIa ist 2,2-Spirobi[4H-1,3,2-benzodioxaborin] (Bull. Chem. Soc. Jap. 51 (1978) 524): (Verbindung der Formel IIa mit M = B, m = n = 0, G = O, R^{a} = R^{b} = R^{a'} = R^{b}' = Wasserstoff). Ein weiteres Beispiel für ein Monomere II^{a'} ist Bis-(4H-1,3,2-benzodioxaborin-2-yl)oxid ((Verbindung der Formel IIa' mit M = B, m = n = 0, L abwesend (q = 0), G = O, R^{a} = R^{b} = R^{a'} = R^{b'} = Wasserstoff; Bull. Chem. Soc. Jap. 51 (1978) 524).

In den Monomeren II und IIa bildet die Einheit MQQ' bzw. MO₂ die polymerisierbare Einheit A, wohingegen die verbleibenden Teile des Monomers II bzw. IIa, d.h. die Gruppen der Formel A bzw. Aa, abzüglich der Atome Q bzw. Q' (bzw. abzüglich des Sauerstoffatoms in Aa) die polymerisierbaren Einheiten B bilden.

Gemäß einer bevorzugten Ausführungsform 1a copolymerisiert man ein Gemisch zweier oder mehrerer Monomere M1 und M2, wobei das Monomer M1 ein Monomer der Formel II oder IIa ist und das weitere Monomer M2 ebenfalls unter den Monomeren der Formeln II oder IIa ausgewählt ist, wobei sich das Monomer M1 von dem Monomer M2 in der Art der polymerisierbaren Einheit A, also dem (Halb)Metallatom M unterscheidet. Insbesondere steht dann das (Halb)Metallatom M im Monomer M1 für Silizium und im Monomer M2 für ein von Silizium verschiedenes (Halb)Metallatom, insbesondere für B, Ti, Zr, Hf oder Sn und speziell für Ti oder B.

Gemäß einer weiteren bevorzugten Ausführungsform 1 b copolymerisiert man ein Gemisch zweier oder mehrerer Monomere M1 und M2, wobei das Monomer M1 ein Monomer der Formel II oder IIa ist und das weitere Monomer M2 unter den Monomeren der im Folgenden definierten Formeln III oder IIIa ausgewählt ist. Auch hier unterscheidet sich das Monomer M1 von dem Monomer M2 in der Art der polymerisierbaren Einheit A, nämlich dadurch das das Monomer M2 Liganden aufweist, die unter Polymerisationsbedingungen am Metall verbleiben können. Insbesondere steht dann das (Halb)Metallatom M im Monomer M1 für Silizium, Bor oder Titan und im Monomer M2 für Silizium. Ebenso bevorzugt steht dann das (Halb)Metallatom M im Monomer M1 für Silizium, Bor oder Titan und im Monomer M2 für Silizium, Bor oder Zinn.

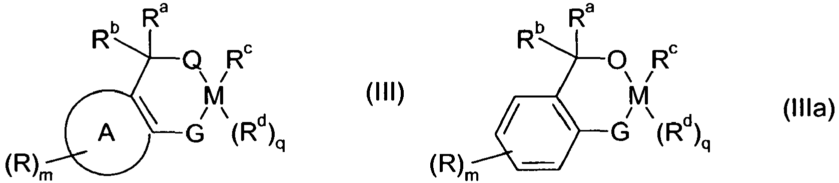

In Formel III haben die Variablen die folgenden Bedeutungen:
- M: steht für ein Metall oder Halbmetall, vorzugsweise ein Metall oder Halbmetall der 3. oder 4. Hauptgruppe oder der 4. oder 5. Nebengruppe des Periodensystems, insbesondere B, Al, Si, Ti, Zr, Hf, Ge, Sn, Pb, V, As, Sb oder Bi, besonders bevorzugt B, Si, Ti, Zr oder Sn, speziell Si;
- A: steht für einen an die Doppelbindung kondensierten aromatischen oder heteroaromatischen Ring;
- m: steht für 0, 1 oder 2, insbesondere 0;
- q: steht, entsprechend der Wertigkeit und Ladung von M, für 0, 1 oder 2;
- G: steht für O, S oder NH, insbesondere O oder NH und speziell für O;
- Q: steht für O, S oder NH, insbesondere für O;
- R: sind unabhängig voneinander unter Halogen, CN, C₁-C₆-Alkyl, C₁-C₆-Alkoxy und Phenyl ausgewählt und stehen insbesondere für Methyl oder Methoxy;
- R^{a}, R^{b}: sind unabhängig voneinander ausgewählt unter Wasserstoff und Methyl oder R^{a} und R^{b} gemeinsam für ein Sauerstoffatom oder =CH₂ stehen, und stehen insbesondere beide für Wasserstoff;
- R^{c}, R^{d}: sind gleich oder verschieden und unter C₁-C₆-Alkyl, C₃-C₆-Cycloalkyl und Aryl ausgewählt und stehen insbesondere für Methyl.

In Formel IIIa haben die Variablen die folgenden Bedeutungen:
- M: steht für ein Metall oder Halbmetall, vorzugsweise ein Metall oder Halbmetall der 3. oder 4. Hauptgruppe oder der 4. oder 5. Nebengruppe des Periodensystems, insbesondere B, Al, Si, Ti, Zr, Hf, Ge, Sn, Pb, V, As, Sb oder Bi, besonders bevorzugt B, Si, Ti, Zr oder Sn, speziell Si;
- m: steht für 0, 1 oder 2, insbesondere 0;
- G: steht für O, S oder NH, insbesondere O oder NH und speziell für O;
- R: sind unabhängig voneinander unter Halogen, CN, C₁-C₆-Alkyl, C₁-C₆-Alkoxy und Phenyl ausgewählt und stehen insbesondere für Methyl oder Methoxy;
- R^{a}, R^{b}: sind unabhängig voneinander ausgewählt unter Wasserstoff und Methyl oder R^{a} und R^{b} gemeinsam für ein Sauerstoffatom oder =CH₂ stehen, und stehen insbesondere beide für Wasserstoff;
- R^{c}, R^{d}: sind gleich oder verschieden und jeweils unter C₁-C₆-Alkyl, C₃-C₆-Cycloalkyl und Aryl ausgewählt und stehen insbesondere für Methyl.

Beispiele für Monomere der Formel III bzw. IIIa sind 2,2-Dimethyl-4H-1,3,2-benzodioxasilin (Verbindung der Formel IIIa mit M = Si, q = 1, m = 0, G = O, R^{a} = R^{b} = Wasserstoff, R^{c} = R^{d} = Methyl), 2,2-Dimethyl-4H-1,3,2-benzooxazasilin, (Verbindung der Formel IIIa mit M = Si, q = 1, m = 0, G = NH, R^{a} = R^{b} = Wasserstoff, R^{c} = R^{d} = Methyl), 2,2-Dimethyl-4-oxo-1,3,2-benzodioxasilin (Verbindung der Formel IIIa mit M = Si, q = 1, m = 0, G = O, R^{a} + R^{b} = O, R^{c} = R^{d} = Methyl) und 2,2-Dimethyl-4oxo-1,3,2-benzooxazasilin, (Verbindung der Formel IIIa mit M = Si, q = 1, m = 0, G = NH, R^{a} + R^{b} = O, R^{c} = R^{d} = Methyl). Derartige Monomere sind bekannt z.B. aus Wieber et al. Journal of Organometallic Chemistry; 1, 1963, 93, 94. Weitere Beispiele für Monomere IIIa sind 2,2-Diphenyl[4H-1,3,2-benzodioxasilin] (J. Organomet. Chem. 71 (1974) 225); 2,2-Di n-butyl[4H-1,3,2-benzodioxastannin] (Bull. Soc. Chim. Belg. 97 (1988) 873); 2,2-Dimethyl[4-methyliden-1,3,2-benzodioxasilin] (J. Organomet. Chem., 244, C5-C8 (1983)); 2-Methyl-2-vinyl[4-oxo-1,3,2-benzodioxazasilin].

Gemäß einer weiteren bevorzugten Ausführungsform 1 c copolymerisiert man ein Gemisch zweier oder mehrerer Monomere M1 und M2, wobei das Monomer M1 ein Monomer der Formel II oder IIa ist und das weitere Monomer M2 unter den Monomeren der im Folgenden definierten Formel IV, V, Va, VI oder VI ausgewählt ist. Hier unterscheidet sich das Monomer M1 von dem Monomer M2 in der Art der polymerisierbaren Einheit B und gegebenenfalls in der Art der Polymerisierbaren Einheit A, nämlich im Falle der Monomeren VI bzw. VI oder dann, wenn die Monomeren IV; V oder VIa ein (Halb-)Metallatom M aufweisen, das vom (Halb-)Metallatom M des Monomers M1 verschieden ist.

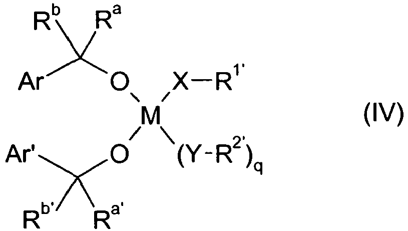

In Formel IV haben die Variablen die folgenden Bedeutungen:
- M: steht für ein Metall oder Halbmetall, vorzugsweise ein Metall oder Halbmetall der 3. oder 4. Hauptgruppe oder der 4. oder 5. Nebengruppe des Periodensystems, insbesondere B, Al, Si, Ti, Zr, Hf, Ge, Sn, Pb, V, As, Sb oder Bi, besonders bevorzugt Si, Ti, Zr oder Sn, speziell Si;
- Ar, Ar': sind gleich oder verschieden und stehen jeweils für einen aromatischen oder heteroaromatischen Ring, insbesondere für 2-Furyl oder Phenyl, wobei der aromatische oder heteroaromatische Ring gegebenenfalls 1 oder 2 Substituenten aufweist, die unter Halogen, CN, C₁-C₆-Alkyl, C₁-C₆-Alkoxy und Phenyl ausgewählt sind;
- R^{a}, R^{b}, R^{a'}, R^{b'}: sind unabhängig voneinander ausgewählt unter Wasserstoff und Methyl oder R^{a} und R^{b} und/oder R^{a} und R^{b'} stehen jeweils gemeinsam für ein Sauerstoffatom; insbesondere stehen R^{a}, R^{b}, R^{a'}, R^{b'} jeweils für Wasserstoff;
- q: steht entsprechend der Wertigkeit von M für 0, 1 oder 2 und speziell für 1;
- X, Y: sind gleich oder verschieden und stehen jeweils für O, S, NH oder eine chemische Bindung; und
- R^{1'}, R^{2'}: sind gleich oder verschieden und stehen jeweils für C₁-C₆-Alkyl, C₃-C₆-Cycloalkyl, Aryl oder für einen Rest Ar"-C(R^{a"},R^{b"})-, worin Ar" die für Ar bzw. R' angegebenen Bedeutungen hat und R^{a"}, R^{b"} die für R^{a}, R^{b} bzw. die für R^{a'}, R^{b'} angegebenen Bedeutungen aufweisen oder R^{1'}, R^{2'} stehen gemeinsam mit X und Y für einen Rest der Formel A, insbesondere einen Rest der Formel Aa, wie zuvor definiert.

Unter den Monomeren der Formel IV sind insbesondere solche Monomere bevorzugt, worin q = 0, 1 oder 2, insbesondere q = 1 ist und die Gruppen X-R^{1'} und Y-R^{2'} gleich oder verschieden sind und für eine Gruppe Ar"-C(R^{a"},R^{b"})O, und vorzugsweise für eine Gruppe Ar"-CH₂O (R^{a} = R^{b} = Wasserstoff) stehen, wobei Ar" die zuvor genannten Bedeutungen aufweist und insbesondere ausgewählt ist unter Furyl, Thienyl, Pyrrolyl und Phenyl, wobei die vier genannten Ringe unsubstituiert sind oder einen oder zwei Substituenten aufweisen, die unter Halogen, CN, C₁-C₆-Alkyl, C₁-C₆-Alkoxy und Phenyl ausgewählt sind. Derartige Monomere lassen sich durch die folgenden Formeln V bzw. Va beschreiben:

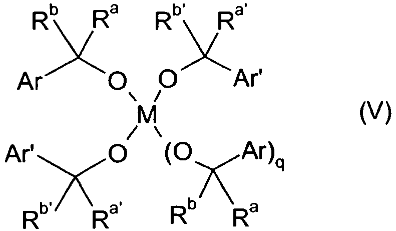

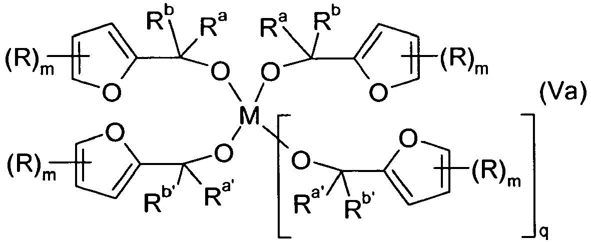

In den Formel V und Va haben die Variablen die folgenden Bedeutungen:
- M: steht für ein Metall oder Halbmetall, vorzugsweise ein Metall oder Halbmetall der 3. oder 4. Hauptgruppe oder der 4. oder 5. Nebengruppe des Periodensystems, insbesondere B, Al, Si, Ti, Zr, Hf, Ge, Sn, Pb, V, As, Sb oder Bi, besonders bevorzugt B, Si, Ti, Zr oder Sn, speziell Si;
- Ar, Ar': in Formel V sind gleich oder verschieden und stehen jeweils für einen aromatischen oder heteroaromatischen Ring, insbesondere für 2-Furyl oder Phenyl, wobei der aromatischen oder heteroaromatischen Ring gegebenenfalls 1 oder 2 Substituenten aufweist, die unter Halogen, CN, C₁-C₆-Alkyl, C₁-C₆-Alkoxy und Phenyl ausgewählt sind;
- R^{a}, R^{b}, R^{a'}, R^{b'}: sind unabhängig voneinander ausgewählt unter Wasserstoff und Methyl oder R^{a} und R^{b} und/oder R^{a} und R^{b'} stehen jeweils gemeinsam für ein Sauerstoffatom; insbesondere stehen R^{a}, R^{b}, R^{a'}, R^{b'} jeweils für Wasserstoff;
- q: steht entsprechend der Wertigkeit von M für 0, 1 oder 2 und speziell für 1.

In Formel Va steht m für 0, 1 oder 2 und insbesondere für 0, und R ist ausgewählt unter Halogen, CN, C₁-C₆-Alkyl, C₁-C₆-Alkoxy und Phenyl und speziell unter Methyl und Methoxy.

Ein Beispiel für ein Monomer der Formel V bzw. Va ist Tetrafurfuryloxysilan (Verbindung der Formel Va mit M = Si, q = 1, m = 0, R^{a} = R^{b} = Wasserstoff): Angew. Chem. Int. Ed., 46 (2007) 628. Ein weiteres Beispiel für das Monomer V bzw. Va ist Tetrafurfurylorthotitanat: Adv. Mater. 2008, 20, 4113. Diese Verbindung tetramerisiert zu (µ4-Oxido)-hexakis(m-furfuryloxo)-octakis(furfuryloxo)tetratitanium, welches als Zwillingsmonomer eingesetzt wird. Ein weiteres Beispiel für das Monomer V bzw. Va ist Trifurfuryloxyboran.

Unter den Monomeren der Formel IV sind weiterhin solche Monomere bevorzugt, worin die Gruppen X-R^{1'} und Y-R^{2'} gleich oder verschieden sind und unter C₁-C₆-Alkyl, C₃-C₆-Cycloalkyl und Aryl, wie z.B. Phenyl, ausgewählt sind, d.h. X und Y stehen für eine chemische Bindung. Derartige Monomere lassen sich durch die folgenden Formeln VI bzw. VIa beschreiben:

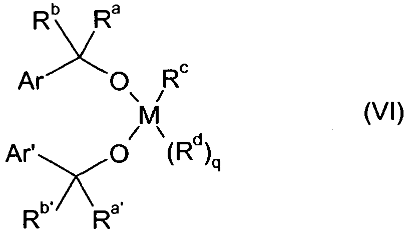

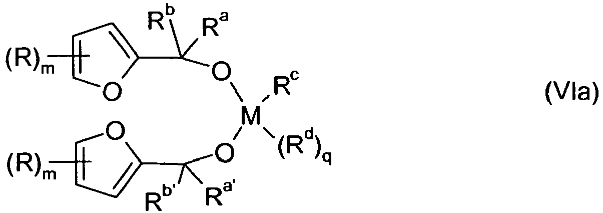

In den Formel VI und VIa haben die Variablen die folgenden Bedeutungen:
- M: steht für ein Metall oder Halbmetall, vorzugsweise ein Metall oder Halbmetall der 3. oder 4. Hauptgruppe oder der 4. oder 5. Nebengruppe des Periodensystems, insbesondere B, Al, Si, Ti, Zr, Hf, Ge, Sn, Pb, V, As, Sb oder Bi, besonders bevorzugt B, Si, Ti, Zr oder Sn, speziell Si;
- Ar, Ar': in Formel VI sind gleich oder verschieden und stehen jeweils für einen aromatischen oder heteroaromatischen Ring, insbesondere für 2-Furyl oder Phenyl, wobei der aromatischen oder heteroaromatischen Ring gegebenenfalls 1 oder 2 Substituenten aufweist, die unter Halogen, CN, C₁-C₆-Alkyl, C₁-C₆-Alkoxy und Phenyl ausgewählt sind;
- R^{a}, R^{b}, R^{a'}, R^{b'}: sind unabhängig voneinander ausgewählt unter Wasserstoff und Methyl oder R^{a} und R^{b} und/oder R^{a} und R^{b'} stehen jeweils gemeinsam für ein Sauerstoffatom; insbesondere stehen R^{a}, R^{b}, R^{a'}, R^{b'} jeweils für Wasserstoff;
- q: steht entsprechend der Wertigkeit von M für 0, 1 oder 2 und speziell für 1;
- R^{c}, R^{d}: sind gleich oder verschieden und jeweils unter C₁-C₆-Alkyl, C₃-C₆-Cycloalkyl und Aryl ausgewählt und stehen insbesondere für Methyl.

In Formel VIa steht m für 0, 1 oder 2 und insbesondere für 0, und R ist ausgewählt unter Halogen, CN, C₁-C₆-Alkyl, C₁-C₆-Alkoxy und Phenyl und speziell unter Methyl und Methoxy.

Ein Beispiel für ein Monomer der Formel VI bzw. VIa ist Bis(furfuryloxy)dimethylsilan (Verbindung der Formel VIa mit M = Si, q = 1, m = 0, R^{a} = R^{b} = Wasserstoff, R^{c} = R^{d} = Methyl).

Derartige Monomere der Formeln IV, V, Va, VI bzw. VIa sind aus dem Stand der Technik bekannt, z.B. aus dem eingangs zitierten Aufsatz von Spange et al. und der darin zitierten Literatur, oder können in analoger Weise hergestellt werden.

Gemäß einer weiteren bevorzugten Ausführungsform 1 d umfassen die zu polymerisierenden Monomere M wenigstens ein Monomer der allgemeinen Formel IV, insbesondere wenigstens ein Monomer der allgemeinen Formel V, und speziell wenigstens ein Monomer der allgemeinen Formel Va, wie zuvor definiert.

Gemäß einer bevorzugten Ausführungsform 1e copolymerisiert man ein Gemisch zweier oder mehrerer Monomere M1 und M2, wobei das Monomer M1 ein Monomer der Formel V oder Va ist und das weitere Monomer M2 ebenfalls unter den Monomeren der Formeln V oder Va ausgewählt ist, wobei sich das Monomer M1 von dem Monomer M2 in der Art der polymerisierbaren Einheit A, also dem (Halb)Metallatom M unterscheidet. Insbesondere steht dann das (Halb)Metallatom M im Monomer M1 für Silizium und im Monomer M2 für ein von Silizium verschiedenes (Halb)Metallatom, insbesondere für Ti, Zr, Hf oder Sn und speziell für Ti.

Gemäß einer weiteren bevorzugten Ausführungsform 1f copolymerisiert man ein Gemisch zweier oder mehrerer Monomere M1 und M2, wobei das Monomer M1 ein Monomer der Formel V oder Va ist und das weitere Monomer M2 unter den Monomeren der zuvor definierten Formeln VI oder VIa ausgewählt ist. Auch hier unterscheidet sich das Monomer M1 von dem Monomer M2 in der Art der polymerisierbaren Einheit A, nämlich dadurch das das Monomer M2 Liganden aufweist, die unter Polymerisationsbedingungen am Metall verbleiben können. Insbesondere steht dann das (Halb)Metallatom M im Monomer M1 für Silizium oder Titan und im Monomer M2 für Silizium.

Gemäß einer bevorzugten Ausgestaltung der erfindungsgemäßen Ausführungsform 2 umfassen die zu polymerisierenden Monomere wenigstens ein Monomer M, das unter den Monomeren der Formel I ausgewählt ist und wenigstens ein weiteres, von den Monomeren der Formel I verschiedenes Monomer M' (Comonomer M'), das mit der Monomereinheit B in Formel I copolymerisierbar ist. Ein solches Comonomer kann beispielsweise Formaldehyd oder ein Formaldehyd-Precursor wie Paraformaldehyd oder Trioxan sein.

Gemäß einer besonders bevorzugten Ausgestaltung der erfindungsgemäßen Ausführungsform 2 umfassen die zu polymerisierenden Monomere wenigstens ein Monomer M, das unter den Monomeren der Formel II und speziell unter den Monomeren der Formel IIa ausgewählt ist und wenigstens ein weiteres, von den Monomeren der Formel II bzw. IIa verschiedenes konventionelles Monomer M' (Comonomer M'), das mit der Monomereinheit B in Formel II bzw. IIa copolymerisierbar ist. Ein solches Comonomer kann beispielsweise Formaldehyd oder ein Formaldehyd-Precursor wie Paraformaldehyd oder Trioxan sein.

Gemäß einer weiteren besonders bevorzugten Ausgestaltung der erfindungsgemäßen Ausführungsform 2 umfassen die zu polymerisierenden Monomere wenigstens ein Monomer M, das unter den Monomeren der Formel V und speziell unter den Monomeren der Formel Va ausgewählt ist und wenigstens ein weiteres, von den Monomeren der Formel V bzw. Va verschiedenes konventionelles Monomer M' (Comonomer M'), das mit der Monomereinheit B in Formel II bzw. IIa copolymerisierbar ist. Ein solches Co-monomer kann beispielsweise Formaldehyd oder ein Formaldehyd-Precursor wie Paraformaldehyd oder Trioxan sein.

Gemäß einer weiteren Ausführungsform der Erfindung sind die Zwillingsmonomere unter aromatischen Verbindungen ausgewählt, die im Mittel wenigstens zwei an gleiche oder verschiedene Arylgruppen, insbesondere an Phenylringe gebundene Trialkylsilyloxymethylgruppen und/oder Aryldialkylsilyloxymethylgruppen aufweisen. Alkyl steht in diesem Zusammenhang für Alkyl mit 1 bis 4 C-Atomen, insbesondere für Methyl oder Ethyl. Aryl bedeutet in diesem Zusammenhang Phenyl oder Naphthyl, insbesondere Phenyl. Ein Beispiel für eine Trialkylsilyloxymethylgruppe ist Trimethylsilyloxymethyl ((H₃C)₃Si-O-CH₂-). Ein Beispiel für eine Aryldialkylsilyloxymethylgruppe ist Dimethylphenylsilyloxymethyl (Phenyl(H₃C)₂Si-O-CH₂-) Hierbei kann der Arylring, an welchen die Trialkylsilyloxymethylgruppen und/oder Aryldialkylsilyloxymethylgruppen gebunden sind, weitere Substituenten aufweisen, wie beispielsweise C₁-C₄-Alkoxy wie Methoxy, C₁-C₄-Alkyl, Trialkylsilyloxy oder Aryldialkylsilyloxy. Insbesondere handelt es sich bei derartigen Zwillingsmonomeren um phenolische Verbindungen, die wenigstens zwei an Phenylringe der phenolischen Verbindung gebundene Trialkylsilyloxymethylgruppen und/oder Aryldialkylsilyloxymethylgruppen aufweisen, wobei die OH-Gruppen der phenolischen Verbindungen verethert sein können, insbesondere mit Trialkylsilylgruppen und/oder Aryldialkylsilylgruppen. Derartige Verbindungen können durch Hydroxymethylierung von Aromatischen Verbindungen, insbesondere von phenolischen Verbindungen und anschließende Umsetzung mit Trialkylhalogensilanen bzw. mit Aryldialkylhalogensilanen hergestellt werden, wobei im Falle phenolischer Ausgangsmaterialien nicht nur die Hydroxymethylgruppen, sondern auch die phenolischen OH-Gruppen in die entsprechenden Silylether überführt werden. Beispiele für aromatische Verbindungen sind insbesondere phenolische Verbindungen wie Phenol, Kresole und Bisphenol A (= 2,2-Bis-(4-hydroxyphenyl)propan.

Die vorgenannten aromatischen Verbindungen, die im Mittel wenigstens zwei an gleiche oder verschiedene Arylgruppen, insbesondere an Phenylringe gebundene Trialkylsilyloxymethylgruppen und/oder Aryldialkylsilyloxymethylgruppen aufweisen, können untereinander copolymerisiert werden. In diesem Fall würde man solche Verbindungen wählen, die sich in den zugrundeliegenden Aromaten unterscheiden. Vorzugsweise werden die aromatischen Verbindungen, die im Mittel wenigstens zwei an gleiche oder verschiedene Arylgruppen, insbesondere an Phenylringe gebundene Trialkylsilyloxymethylgruppen und/oder Aryldialkylsilyloxymethylgruppen aufweisen, zusammen mit den Monomeren der Formel II, IIa, II'oder II'a oder mit den Verbindungen der Formeln IV oder V bzw. Va copolymerisiert.

Die Polymerisationsbedingungen sind im erfindungsgemäßen Verfahren so gewählt, dass bei der Polymerisation der Monomere M die Monomereinheiten A und B synchron polymerisieren. Der Begriff "synchron" bedeutet nicht zwingend, dass die Polymerisation der ersten und der zweiten Monomereinheit mit gleicher Geschwindigkeit ablaufen. Vielmehr versteht man unter "synchron", dass die Polymerisation der ersten und der zweiten Monomereinheit kinetisch gekoppelt sind und durch die gleichen Polymerisationsbedingungen ausgelöst werden.

Die Copolymerisation der Monomere M, insbesondere der Monomere der zuvor definierten allgemeinen Formeln I, II, IIa, III, IIIa, IV, V, Va, VI oder VIa kann in Analogie zu den im Stand der Technik beschriebenen Methoden erfolgen und wird insbesondere unter protischer Katalyse oder in Gegenwart von aprotischen Lewis-Säuren durchgeführt werden. Bevorzugte Katalysatoren sind hierbei Brönstedt-Säuren, beispielsweise organische Carbonsäuren wie z.B. Trifluoressigsäure oder Milchsäure, sowie organische Sulfonsäuren wie Methansulfonsäure, Trifluormethansulfonsäure oder Toluolsulfonsäure. Ebenfalls geeignet sind anorganische Brönstedt-Säuren wie HCl, H₂SO₄ oder HClO₄. Als Lewis-Säure kann zum Beispiel BF₃, BCl₃, SnCl₄, TiCl₄, oder AlCl₃ eingesetzt werden. Auch der Einsatz von komplex gebundenen oder in ionischen Flüssigkeiten gelösten Lewis-Säuren ist möglich. Die Säure wird üblicherweise in einer Menge von 0,1 bis 10 Gew.-% bevorzugt 0,5 bis 5%, bezogen auf das Monomer eingesetzt.

Die Polymerisation kann in Substanz oder vorzugsweise in einem inerten Verdünnungsmittel durchgeführt werden. Geeignete Verdünnungsmittel sind beispielsweise halogenierte Kohlenwasserstoff wie Dichlormethan, Trichlormethan, Dichlorethen oder Kohlenwasserstoffe wie Toluol, Xylol oder Hexan und deren Gemische.

Vorzugsweise wird die Polymerisation der Monomere der Formel I in weitgehender Abwesenheit von Wasser, d.h. die Konzentration an Wasser zu Beginn der Polymerisation beträgt weniger als 0,1 Gew.-%. Dementsprechend werden als Monomere der Formel I solche Monomere bevorzugt, die unter Polymerisationsbedingungen kein Wasser abspalten. Hierzu zählen insbesondere die Monomere der Formeln II, IIa, III und IIIa.

Die Polymerisationstemperatur liegt üblicherweise im Bereich von 0 bis 150°C, insbesondere im Bereich von 20 bis 100°C.

Der Copolymerisation der Monomere M können sich Reinigungsschritte und gegebenenfalls Trocknungsschritte anschließen.

Der Copolymerisation der Monomere M kann sich eine Kalzinierung anschließen. Hierbei wird das bei der Polymerisation der Monomereinheit(en) B gebildete organische polymere Material zur Kohlenstoffphase carbonisiert.

Der Copolymerisation der Monomere M kann sich eine oxidative Entfernung der organischen Polymerphase anschließen. Hierbei wird das bei der Polymerisation der Monomereinheit(en) B gebildete organische polymere Material oxidiert und man erhält ein nanoporöses oxidisches oder nitridisches Material.

Das nach dem erfindungsgemäßen Verfahren erhältliche Nanokompositmaterial weist wenigstens eine anorganische oder metallorganische Polymerphase, die aus der Polymerisation der Monomereinheit A resultiert, und wenigstens eine organische Polymerphase auf, die aus der Polymerisation der Monomereinheit A resultiert. Die die Abmessungen der Phasendomänen in dem so erhaltenen Komposit-Material liegen im Bereich weniger Nanometer. Zudem weisen die Phasendomänen der anorganischen bzw. metallorganischen Phase und die Phasendomänen der organischen Phase eine co-kontinuierliche Anordnung auf, d.h. sowohl die organische Phase als auch die anorganische oder metallorganische Phase durchdringen sich gegenseitig und bilden im wesentlichen keine diskontinuierlichen Bereiche aus. Die Abstände zwischen benachbarten Phasengrenzen, bzw. die Abstände zwischen den Domänen benachbarter identischer Phasen sind äußerst gering und liegen im Mittel bei maximal 10 nm, vorzugsweise maximal 5 nm und insbesondere maximal 2 nm. Eine makroskopisch sichtbare Trennung in diskontinuierliche Domänen der jeweiligen Phase tritt nicht auf.

Unter dem Abstand benachbarter identischer Phasen ist z.B. der Abstand zweier Domänen der anorganischen bzw. metallorganischen Phase, welche durch eine Domäne der organischen Polymerphase voneinander getrennt sind bzw. der Abstand zweier Domänen der organischen Polymerphase, welche durch eine Domäne der anorganischen bzw. metallorganischen Phase voneinander getrennt sind, zu verstehen. Der mittlere Abstand zwischen den Domänen benachbarter identischer Phasen kann mittels kombinierter Röntgenkleinwinkelstreuung (SAXS - Small Angle X-Ray Scattering) über den Streuvektor q ermittelt werden (Messung in Transmission bei 20°C, monochromatisierte CuK_{α}-Strahlung, 2D-Detektor (Image-Plate), Spaltkollimation).

Bezüglich des Begriffs kontinuierliche Phasendomäne, diskontinuierliche Phasendomäne und co-kontinuierliche Phasendomäne wird auch auf W. J. Work et al. Definitions of Terms Related to Polymer Blends, Composites and Multiphase Polymeric Materials, (IUPAC Recommendations 2004), Pure Appl. Chem., 76 (2004), S. 1985-2007, insbesondere S. 2003 verwiesen. Hiernach versteht man unter einer co-kontinuierlichen Anordnung einer Zweikomponenten Mischung eine phasenseparierte Anordnung der beiden Phasen, wobei innerhalb einer Domäne der jeweiligen Phase jeder Bereich der Phasengrenzfläche der Domäne durch einen kontinuierlichen Pfad miteinander verbunden werden kann, ohne dass der Pfad eine Phasengrenzfläche durchschreitet/durchkreuzt.

In den erfindungsgemäßen Nanokompositmaterialien machen die Bereiche, in denen die organische Phase und die anorganische bzw. metallorganische Phase im wesentlichen co-kontinuierliche Phasendomänen bilden, wenigstens 80 Vol.-%, insbesondere 90 Vol.-% der Nanokompositmaterialien aus, wie sich durch kombinierte Anwendung von TEM und SAXS ermitteln lässt.

Die erfindungsgemäßen Nanokompositmaterialien können in an sich bekannter Weise in nanoporöse anorganische Materialien überführt werden, indem man die organischen Bestandteile des erfindungsgemäßen Nanokompositmaterials oxidativ entfernt. Hierbei bleibt die Nanostruktur der im erfindungsgemäßen Nanokompositmaterial erhalten anorganischen Phase enthalten und es resultiert, abhängig von den gewählten Monomeren ein Nitrid oder Oxid des (Halb)Metalls M oder eine Mischform. Die Oxidation erfolgt typischerweise durch Calcinieren in einer sauerstoffhaltigen Atmosphäre wie im eingangs zitierten Aufsatz von Spange et al. beschrieben. Derartige Materialien sind neu und ebenfalls Gegenstand der vorliegenden Erfindung. In der Regel führt man die Calcinierung unter Sauerstoffzutritt bei einer Temperatur im Bereich von 400 bis 1500°C, insbesondere im Bereich von 500 bis 1000°C durch. Das Calcinieren erfolgt typischerweise in einer sauerstoffhaltigen Atmosphäre, z.B. in Luft oder anderen Sauerstoff/Stickstoffgemischen, wobei der Volumenanteil von Sauerstoff über weite Bereiche variiert werden kann und beispielsweise im Bereich von 5 bis 50 Vol.-% liegt.

Die erfindungsgemäßen Nanokompositmaterialien können auch in ein elektroaktives Nanokompositmaterial überführt, werden welches neben einer anorganischen Phase eines (Halb-)Metalloxids oder -nitrids des (Halb-)Metalls M eine Kohlenstoffphase C aufweist. Derartige Materialien sind erhältlich durch Calcinieren des erfindungsgemäß erhältlichen Nanokompositmaterials unter weitgehendem oder vollständigem Ausschluss von Sauerstoff. Dementsprechend betrifft die vorliegende Erfindung ein kohlenstoffhaltiges Nanokompositmaterial, welches
a) eine Kohlenstoffphase C;
b) und wenigstens eine anorganische Phase eines (Halb-)Metalloxids oder Nitrids des (Halb-)Metalls M;
das durch Calcinieren des erfindungsgemäßen, durch Copolymerisation erhaltenen Nanokompositmaterials unter weitgehendem oder vollständigem Ausschluss von Sauerstoff erhältlich ist.

In den kohlenstoffhaltiges Nanokompositmaterial bilden die Kohlenstoffphase C und die anorganische Phase im Wesentlichen co-kontinuierliche Phasendomänen, wobei der mittlere Abstand zweier benachbarter Domänen identischer Phasen in der Regel maximal 10 nm beträgt.

In der Regel führt man die Calcinierung bei einer Temperatur im Bereich von 400 bis 1500°C, insbesondere im Bereich von 500 bis 1000°C durch.

Die Calcinierung erfolgt dann üblicherweise unter weitgehendem Ausschluss von Sauerstoff. Mit anderen Worten, während der Calcinierung ist der Sauerstoffpartialdruck in der Reaktionszone, in welcher die Calcinierung durchgeführt wird, gering und wird vorzugsweise 20 mbar, insbesondere 10 mbar nicht überschreiten. Vorzugsweise führt man die Calcinierung in einer Inertgas-Atmosphäre durch, z.B. unter Stickstoff oder Argon. Vorzugsweise wird die Inertgas-Atmosphäre weniger als 1 Vol.-%, insbesondere weniger als 0,1 Vol.-% Sauerstoff enthalten. In einer ebenfalls bevorzugten Ausführungsform der Erfindung führt man die Calcinierung unter reduzierenden Bedingungen durch, z.B. in einer Atmosphäre, welche Wasserstoff (H₂), Kohlenwasserstoffgase wie Methan, Ethan oder Propan, oder Ammoniak (NH₃), gegebenenfalls als Gemisch mit einer Inerte wie Stickstoff oder Argon, enthält.

Zur Entfernung flüchtiger Bestandteile kann die Calcinierung in einem Inertgasstrom oder in einem Gasstrom, welcher reduzierende Gase wie Wasserstoff, Kohlenwasserstoffgase oder Ammoniak enthält, durchgeführt werden.

Die folgenden Beispiele und Abbildungen dienen der Erläuterung der Erfindung.

### I) Analytik:

Die bei der Copolymerisation erhaltenen Proben wurden mittels TEM untersucht: Die TEM-Untersuchungen wurden als HAADF-STEM mit einem Transmissionselektronenmikroskop Tecnai F20 (FEI, Eindhoven, NL) bei einer Arbeitsspannung von 200 kV in Ultradünnschichttechnik (Einbettung der Proben in Kunstharz als Matrix) durchgeführt.

| | |
|---|---|
| Abbildung 1: | HAADF-STEM-Untersuchung der Probe aus Beispiel 7 mit einer Vergrößerung von 10⁶. |
| Abbildung 2: | HAADF-STEM-Untersuchung der Probe aus Beispiel 24 mit einer Vergrößerung von 10⁶. |
| Abbildung 3: | HAADF-STEM-Untersuchung der Probe aus Beispiel 26 mit einer Vergrößerung von 10⁶. |

### II) Eingesetzte Monomere:

Es wurden die folgenden Monomere eingesetzt:
Monomer A: 2,2'-Spirobi[4H-1,3,2-benzodioxasilin]: Herstellungsbeispiel 1;
Monomer B: 2,2-Dimethyl[4H-1,3,2-benzodioxasilin]: Tetrahedron Lett. 24 (1983) 1273;
Monomer C: 2,2-Dimethyl[4-oxo-1,3,2-benzodioxasilin]: Chem. Ber. 96, 1561;
Monomer D: 2-Methyl-2-vinyl[4-oxo-1,3,2-benzodioxazasilin]: Herstellungsbeispiel 2;
Monomer E: 2,2-Diphenyl[4H-1,3,2-benzodioxasilin]: J. Organomet. Chem. 71 (1974) 225;
Monomer F: 2,2-Di n-butyl[4H-1,3,2-benzodioxastannin]: Bull. Soc. Chim. Belg. 97 (1988) 873;
Monomer G: 2,2-Dimethyl[4-methyliden-1,3,2-benzodioxasilin]: J. Organomet. Chem., 244, C5-C8 (1983);
Monomer H: Bis (4H-1,3,2-benzodioxaborin-2-yl)oxid: Bull. Chem. Soc. Jap. 51 (1978) 524
Monomer I: 2,2-Spirobi[4H-1,3,2-benzodioxaborin]: Bull. Chem. Soc. Jap. 51 (1978) 524;
Monomer K: 2,2-Bis[4-trimethylsilyloxy-3,5-bis(trimethylsilyloxymethyl)phenyl]propan (Herstellungsbeispiel 3);
Monomer L: Bis(trimethylsilyloxyymethyl)(trimethylsilyloxy)benzol (Herstellungsbeispiel 4);
Monomer M: 2,2'-Spirobi[6H-1,3,2-dioxasilin] Makrom. Chem. 11 (1953) 51;
Monomer N: Tetrafurfuryloxysilan: Angew. Chem. Int. Ed., 46 (2007) 628;
Monomer O: Difurfuryloxydimethylsilan: Angew. Chem. Int. Ed., 46 (2007) 628;
Monomer P: Tetrafurfurylorthotitanat: Adv. Mater. 2008, 20, 4113;

(Die Verbindung tetramerisiert zu (µ4-Oxido)-hexakis(m-furfuryloxo)-octakis(furfuryloxo)tetratitanium welches als Monomer P eingesetzt wird.) Monomer Q: Trifurfuryloxyboran (Herstellungsbeispiel 5)

### III) Herstellungsbeispiele

### Herstellungsbeispiel 1: 2,2'-Spirobis[4H-1,3,2-benzodioxasilin] (Monomer A)

135,77 g Salicylalkohol (1,0937 mol) wurden in Toluol bei 85°C gelöst. Anschließend wurden 83,24g (0,5469 mol) Tetramethoxysilan (TMOS) langsam zugetropft, wobei nach Zugabe eines Drittels an TMOS 0,3 mL Tetra-n-butylammoniumfluorid (1 M in THF) auf einmal eingespritzt wurde. Man rührte 1 h bei 85°C und destillierte anschließend das Azeotrop Methanol/Touluol (63,7°C) ab. Das restliche Toluol wurde am Rotationsverdampfer entfernt. Das Produkt wurde aus dem erhaltenen Reaktionsgemisch mit Hexan bei ≈ 70°C herausgelöst. Nach Abkühlen auf 20°C dekantierte man die klare Lösung ab. Nach Entfernung des Hexans blieb die Titelverbindung als weißer Feststoff zurück. Das Produkt kann durch Umfällen mit Hexan weiter von Verunreinigungen gereinigt werden.

¹H-NMR 400 MHz, CDCl₃, 25°C, TMS) δ [ppm] = 5.21 (m, 4H,CH₂), 6.97-7.05 (m, 6H), 7.21-7.27 (M, 2H).
¹³C-NMR (100 MHz, CDCl₃, 25 °C): δ [ppm] = 66.3 (CH₂), 119.3, 122.3, 125.2, 125.7, 129.1, 152.4.
²⁹Si-CP-MAS (79.5 MHz): δ [ppm] = - 78.4

### Herstellungsbeispiel 2: 2-Methyl-2-vinyl[4-oxo-1,3,2-benzodioxazasilin] (Monomer D)

Die Herstellung erfolgte in Analogie zu der im Herstellungsbeispiel angegebenen Vorschrift für die Herstellung von Monomer A, wobei man anstelle von Tetramethoxysilan Dimethoxymethylvinylsilan einsetzte. Man erhielt eine klare ölige Flüssigkeit:
¹H-NMR 400 MHz, CDCl₃, 25°C, TMS) δ [ppm] = 0.37 (s, 3H, CH₃), 4,92 (m, 2H,CH₂), 5.96-6.15 (m, 3H, -CH=CH₂), 6.97-7.05 (m, 3H), 7.21-7.27 (M, 1H).

Herstellungsbeispiel 3: 2,2-Bis[4-trimethylsilyloxy-3,5-bis(trimethylsilyloxy-methyl),phenyl]propan (Monomer K)
a) 2,2-Bis[4-hydroxy-3,5-di(hydroxymethyl)phenyl)]propan
   114,4 Bisphenol A (2,2-Bis[4-hydroxyphenyl)]propan) wurden in einer Mischung aus 450 g Wasser und 50 g NaOH vorgelegt. Unter Kühlen (Tmax = 25°C) tropfte man 350 g Formaldehydlösung 30 % zu. Nach 1 h Nachreaktion bei Raumtemperatur erhielt man eine klare Lösung. Der Ansatz wurde durch Zugabe von festem CO₂ neutralisiert. Die dabei erhaltene Lösung wurde mit Kochsalz gesättigt und 3-mal mit Butanol extrahiert. Die Extrakte wurden am Rotationsverdampfer bei 50°C bis 5 mbar eingeengt. Man erhielt ein farbloses Öl, das ohne weitere Reinigung im Folgeschritt eingesetzt wurde.
   ¹H-NMR 400 MHz, CDCl₃, 25°C, TMS δ [ppm] = 7,03 (s, 4 H, Aromat); 5,00 (s, 6 H, -OH (breit)); 4,63 (s, 8H, -CH₂-); 1,60 (s, 6 H, C-CH₃);
b) 2,2-Bis[4-trimethylsilyloxy, 3,5-bis(trimethylsilyloxymethyl),phenyl]propan
   95 g 2,2-Bis[4-hydroxy-3,5-di(hydroxymethyl),phenyl)]propan und 160,9 g N-Methylimidazol wurden in 400 ml Toluol vorgelegt. Unter Rühren und Kühlung (ca. 25-30°C) trug man innerhalb 2 h 213,3 g Trimethylchlorsilan ein. Nach Abklingen der Reaktion abgeklungen wurde der Ansatz 70 min auf 90°C aufgeheizt. Nach Abkühlen wurde das Reaktionsgemisch von Ungelöstem abgetrennt und eingeengt. Man erhielt 154 g eines hellen Öls, das kristallisierte.
   ¹H-NMR 400 MHz, CDCl₃, 25°C, TMS δ [ppm] = 7,15 (s, 4H,Aromat); 4,63 (s, 8H, - CH₂-); 1,66 (s, 6 H, C-CH₃); 0,24 (s, 18H, -O-Si(CH₃)₃); 0,08 (s, 36H, -O-Si(CH₃)₃)

### Herstellungsbeispiel 4: Bis(trimethylsilyloxyymethyl)(trimethylsilyloxy)benzol (Monomer L)

a) bishydroximethyliertes Phenol
   28 g NaOH wurden in 180 ml Wasser gelöst und mit 58,2 g Phenol versetzt. Unter Rühren und Eisbadkühlung wurden innerhalb 2 h 180 g Formaldehydlösung (30 % in Wasser) eintragen. Der Ansatz wurde mit festem CO₂ neutralisiert. Die dabei erhaltene Lösung wurde mit Kochsalz gesättigt und 3-mal mit Butanol extrahiert. Die Extrakte werden am Rotationsverdampfer bei 50°C bis 5 mbar eingeengt. Man erhielt auf diese Weise bishydroximethyliertes Phenol als farbloses Öl.
   ¹H-NMR 400 MHz, CDCl₃, 25°C, TMS δ [ppm] = 6,6 - 7,2 (ss, 2,7 H, Aromat); 4,98 (s, 6 H, -OH (breit!)); 4,4 - 4,7 (ss, 4,5H, -CH2-);
   Dies entspricht einem Substitutionsgrad von 2,3 HO-CH2-Gruppen / Aromat
b) Bis(trimethylsilyloxyymethyl)(trimethylsilyloxy)benzol (Trimethylsilikat des hydroximethylierten Phenols)
   41 g hydroximethyliertes Phenol und 68 g N-Methylimidazol wurden in 200 ml Toluol vorgelegt. Unter Rühren und Kühlung (ca. 25-30°C) wurden innerhalb 2 h 90 g Trimethylchlorsilan eintragen. Nach Abkühlen wurde das Reaktionsgemisch von Ungelöstem abgetrennt und eingeengt. Man erhielt ein helles Öl.
   ¹H-NMR 400 MHz, CDCl₃, 25°C, TMS δ [ppm] = 7,4 - 6,7 (ss, 2,7 H,Aromat); 4,5 -4,9 (ss, 4,5 H, -CH₂-); 0,2 - 0,3 (ss, 9H, -O-Si(CH₃)₃); 0,07 - 0,19 (ss, 20 H, -O-Si(CH₃)₃)

### Herstellungsbeispiel 5: Trifurfuryloxyboran (Monomer Q)

50 mL (0,58 mol) Furfurylalkohol wurden zusammen mit 21,4 mL (0,192 mol) Trimethylborsäureester in einem 250 mL Kolben vorgelegt, der mit Magnetrührer, Rückflusskühler, Destillationsbrücke, Spinne und Vorlauf ausgestattet war. Hierzu gab man 0,5 g KOH. Reaktionsansatz wurde 2 h bei 25°C gerührt; anschließend erhöhte man die Temperatur langsam auf 100°C Ölbadtemperatur und destillierte das entstehende Methanol ab. Der Druck wird schrittweise auf 5 mbar abgesenkt und alle Nebenprodukte wurden abdestilliert. Die Lösung wurde in eine Kugelrohrdestillationsapparatur überführt und das Produkt wurde schließlich bei 198°C und 0,4 mbar erhalten.
Ausbeute: 28 mL (55 %),
¹H-NMR (CDCl₃): δ = 7,42 (3H, dd); 6,33 (3H, dd); 6,26 (3H, dd); 4,83 ppm (6H, s);

### IV) Copolymerisationsbeispiele:

### Beispiele 1 bis 10: Copolymerisation in Substanz

Allgemeine Vorschrift: Hydrophobierte 20 ml Penicillingläser wurden mit 3,5 g Monomerengemisch und 0,035 g Trifluoressigsäure, gelöst in 0,175 g Toluol, befüllt. Dann wurde die Mischung homogenisiert, das Glas wurde mit einer Verschlusskappe geschlossen und für die Polymerisationsdauer in einen Wärmeschrank gegeben, der auf 85°C beheizt war. Die Zusammensetzung des Monomergemischs und die Polymerisationsdauer sowie das optische Erscheinungsbild des Polymerisationsprodukts sind in Tabelle 1 angegeben.

**Tabelle 1**

| # | Eingesetzte Monomere | Molverhältnis | Reaktionsdauer | Aussehen der Probe |
|---|---|---|---|---|
| 1 | A + B | B/A = 4/1 | 12 h | Durchsichtiger Festkörper, hell |
| 2 | A + B | B/A = 2/1 | 10 h | Durchsichtiger Festkörper, hellgelb |
| 3 | A + B | B/A = 1/1 | 6h | Durchsichtiger Festkörper, gelb |
| 4 | A + B | B/A = 1/2 | 6h | Durchsichtiger Festkörper, gelbbraun |
| 5 | A + B | B/A = 1/4 | 6h | Rotbrauner Festkörper |
| 6 | A+F | A/F = 57/43 | 1 h | Gelb, klar |
| 7 | A+F | A/F = 39/61 | 1 h | Gelb, klar |
| 8 | A+F | A/F = 25/75 | 5 d | Hellgelb, trüb/ milchig |
| 9 | A+F | A/F = 72/28 | 1 h | gelb |
| 10 | A+F | A/F = 84/16 | 1 h | Braun |

Die in den Beispielen 6 bis 10 erhaltenen Festkörper wurden mittels TEM analysiert und zeigen jeweils eine nanodisperse Verteilung von anorganischer und organischer Phase mit einer sich gegenseitig durchdringenden Phasenstruktur. Die Abstände benachbarter Domänen sind dabei deutlich unterhalb 5 nm.

### Beispiele 11 bis 22: Copolymerisation in Substanz

In analoger Weise zur allgemeinen Vorschrift I wurden Gemische aus 4 g Monomer A und 1 g Comonomer 16 h bei 85°C copolymerisiert. Die Comonomere sowie das optische Erscheinungsbild des Polymerisationsprodukts sind in Tabelle 2 angegeben.

**Tabelle 2**

| # | Co-Monomer | Aussehen der Probe |
|---|---|---|
| 11 | C | Klarer Harzkörper, hellbraun |
| 12 | D | Klarer Harzkörper, hellgelb |
| 13 | E | Klarer Harzkörper, hell |
| 14 | G | Klarer Harzkörper, hellbraun |
| 15 | H | Klarer Harzkörper, hell |
| 16 | I | Klarer Harzkörper, hell |
| 17 | K | Klarer Harzkörper, hellgelb |
| 18 | L | Klarer Harzkörper, orange |
| 19 | N | Dunkler Harzkörper |
| 20 | O | Dunkler Harzkörper |
| 21 | P | Dunkler Harzkörper |
| 22 | Q | Dunkler Harzkörper |

Beispiele 23 und 24: Copolymerisation in Substanz mit Dimethoxymethan als konventionellem Comonomer

In analoger Weise zur allgemeinen Vorschrift I wurden Gemische aus Monomer A und Monomer B 16 h bei 85°C unter Zusatz von 0,08 g Dimethoxymethan als konventionellem Comonomer und 0,02 g Trifluoressigsäure als Katalysator copolymerisiert. Die Mengen der Comonomere sind in Tabelle 3 angegeben. In beiden Fällen wurde ein Festkörper erhalten.

Die in den Beispielen 23 und 24 erhaltenen Festkörper wurden mittels TEM analysiert und zeigen jeweils eine nanodisperse Verteilung von anorganischer und organischer Phase mit einer sich gegenseitig durchdringenden Phasenstruktur. Die Abstände benachbarter Domänen sind dabei deutlich unterhalb 5 nm.

Tabelle 3:

| # | Monomer A [g] | Monomer B [g] |
|---|---|---|
| 23 | 0,4 | 1,6 |
| 24 | 1,0 | 1,0 |

### Beispiele 25 und 26: Copolymerisation in Substanz mit Milchsäure als Katalysator

Allgemeine Vorschrift: Hydrophobierte 20 ml Penicillingläser wurden mit 3,5 g Monomerengemisch befüllt und im Trockenschrank bei 90°C aufgeschmolzen. Hierzu gab man 50 mg Milchsäure. Das Glas wurde mit einer Verschlusskappe geschlossen und 16 h in einen auf 90°C beheizten Wärmeschrank gegeben. Die Zusammensetzung des Monomergemischs ist in Tabelle 4 angegeben. In beiden Fällen wurde ein Festkörper erhalten.

Die in den Beispielen 25 und 26 erhaltenen Festkörper wurden mittels TEM analysiert und zeigen jeweils eine nanodisperse Verteilung von anorganischer und organischer Phase mit einer sich gegenseitig durchdringenden Phasenstruktur. Die Abstände benachbarter Domänen sind dabei deutlich unterhalb 5 nm.

**Tabelle 4:**

| # | Monomer A [g] | Monomer L [g] |
|---|---|---|
| 25 | 3,325 | 0,175 |
| 26 | 3,15 | 0,35 |

### Beispiele 27 bis 30: Fällungscopolymerisation aus Lösungsmittel

Allgemeine Versuchsvorschrift: 5 g des Monomergemisches wurden in 50 ml Toluol gelöst. Die Polymerisation wurde durch Zugabe von 5 Gew.-% Trifluorsuffonsäureanhydrid (als 1 M Lösung in Toluol) bei 23°C initiiert. Sofort nach Zugabe des Initiators war ein Farbumschlag von leicht gelb zu braun, verbunden mit einer starken Wärmeentwicklung, erkennbar. Eine Gelierung setzte nach spätestens 15 Minuten ein. Die Reaktionsmischung wurde nach 10 bis 14 Stunden bei 23°C filtriert, und der Feststoff wurde im Vakuum bei 40°C bis zur Massekonstanz getrocknet. Es wurden dunkelbraune bis schwarz/grünliche Pulver in hoher (fast quantitativer Ausbeute) erhalten. Die eingesetzten Monomergemische sind in Tabelle 5 angegeben.

**Tabelle 5: Eingesetztes Monomergemisch:**

| | Bsp. 27 | Bsp. 28 | Bsp. 29 | Bsp. 30 |
|---|---|---|---|---|
| Monomer N [Gew.-%] | 95 | 87 | 84 | 55 |
| Monomer P [Gew.-%] | 5 | 13 | 16 | 45 |

### V) Thermolyse der Hybridmaterialien durch Tempern unter Sauerstoffzutritt

### Beispiele 31 bis 34: Tempern der Hybridmaterialien unter Sauerstoffzutritt

Die in den Beispielen 27 bis 30 erhaltenen Hybridmaterialien wurden bei 600°C (Heizrate: ,.4 K/min, Luftatmosphäre) für 10 Stunden getempert. Es wurden weiße Materialien erhalten, die weniger als 0,8 % Kohlenstoff (Elementaranalyse) enthielten. Ti-Gehalte und BET-Oberflächen (bestimmt durch N₂-Physisorbtion nach DIN 66131) sind in der Tabelle 6 angegeben.

**Tabelle 6:**

| | Bsp. 31 | Bsp. 32 | Bsp. 33 | Bsp. 34 |
|---|---|---|---|---|
| Ausgangsmaterial | Bsp. 27 | Bsp. 28 | Bsp. 29 | Bsp. 30 |
| % Ti Theorie | 3,7 | 10,6 | 13,0 | 35,7 |
| % Ti gefunden | 2,3 | 9,5 | 19,4 | 31,1 |
| BET-Oberfläche [m²/g] | 657 | 622 | 502 | 569 |

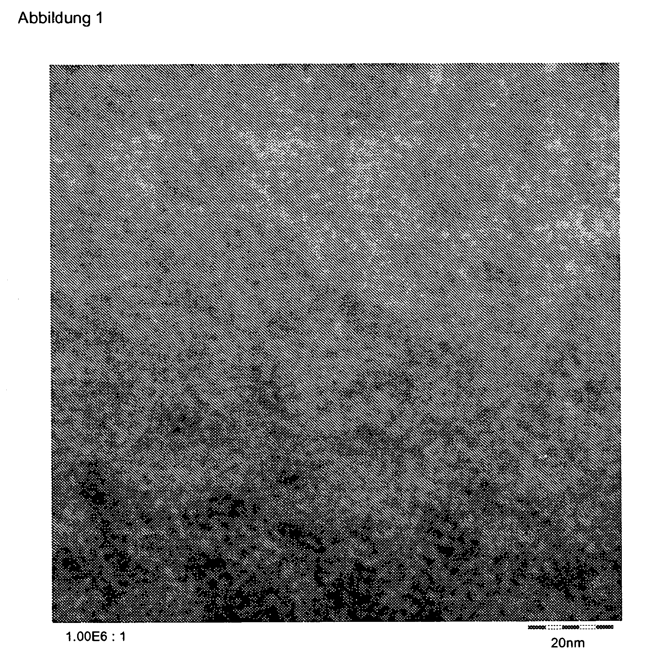

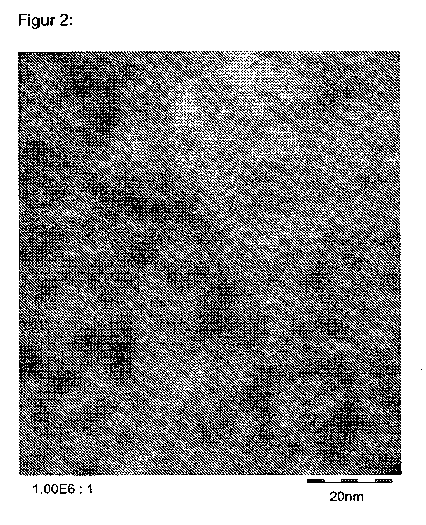

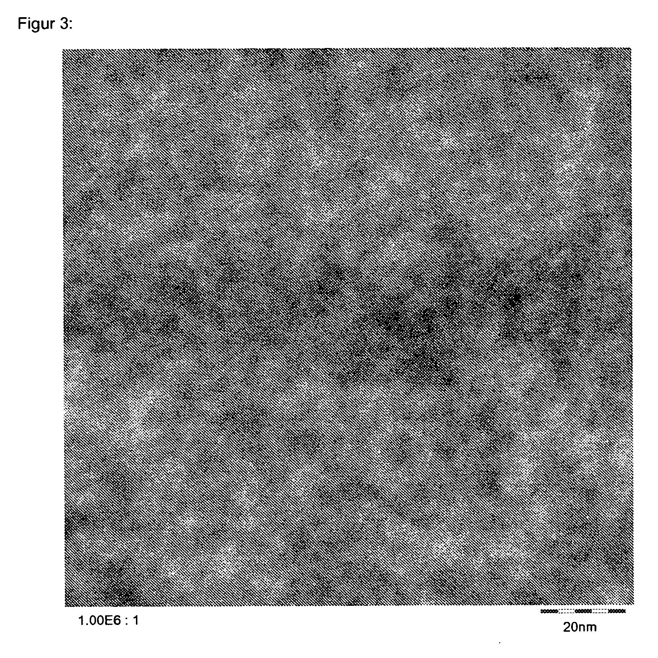

## Patentansprüche

1. Verfahren zur Herstellung eines Nanokompositmaterials aus
a) wenigstens einer anorganischen oder metallorganischen Phase; und
b) einer organischen Polymerphase;
umfassend die Polymerisation wenigstens eines Monomers, das
- wenigstens eine erste polymerisierbare Monomereinheit A, welche ein Metall oder Halbmetall M aufweist, und
- wenigstens eine zweite polymerisierbare organische Monomereinheit B aufweist, die über eine kovalente chemische Bindung mit der polymerisierbaren Einheit A verbunden ist,
unter Polymerisationsbedingungen, unter denen sowohl die polymerisierbare Monomereinheit A als auch die polymerisierbare Einheit B unter Bruch der Bindung zwischen A und B polymerisieren,
wobei die zu polymerisierenden Monomere ein erstes Monomer M1 und wenigstens ein zweites Monomer M2 umfassen, das sich zumindest in einer der Monomereinheiten A oder B von dem Monomer M1 unterscheidet, oder
wobei die zu polymerisierenden Monomere neben dem wenigstens einen zu polymerisierenden Monomer wenigstens ein weiteres, davon verschiedenes Monomer ohne Monomereinheit A umfassen, das mit der Monomereinheit B copolymerisierbar ist.

2. Verfahren nach Anspruch 1, wobei Metall oder Halbmetall der Monomereinheit A ausgewählt ist unter B, Al, Si, Ti, Zr, Hf, Ge, Sn, Pb, V, As, Sb, Bi, und deren Mischungen.

3. Verfahren nach einem der vorhergehenden Ansprüche, wobei das Metall oder Halbmetall M zu wenigstens 90 mol-%, bezogen auf die Gesamtmenge an M, Silizium umfasst.

4. Verfahren nach einem der vorhergehenden Ansprüche, wobei die zu polymerisierenden Monomere, welche wenigstens eine Monomereinheit A und wenigstens eine Monomereinheit B aufweisen, ein erstes Monomer M1 und wenigstens ein zweites Monomer M2 umfassen, das sich zumindest in einer der Monomereinheiten A oder B von dem Monomer M1 unterscheidet und das Molverhältnis der Monomere M1 und M2 zueinander im Bereich von 5 : 95 bis 95 : 5 liegt.

5. Verfahren nach einem der vorhergehenden Ansprüche, wobei die zu polymerisierenden Monomere, welche wenigstens eine Monomereinheit A und wenigstens eine Monomereinheit B aufweisen, ein erstes Monomer M1 und wenigstens ein zweites Monomer M2 umfassen, das sich zumindest in der Monomereinheit A von dem Monomer M1 unterscheidet.

6. Verfahren nach einem der vorhergehenden Ansprüche, wobei die Monomere, welche wenigstens eine Monomereinheit A und wenigstens eine Monomereinheit B aufweisen, durch die allgemeine Formel I beschrieben werden: 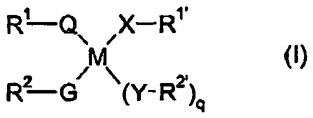 worin
M für ein Metall oder Halbmetall steht;
R¹, R² gleich oder verschieden sein können und jeweils für einen Rest Ar-C(R^{a},R^{b})- stehen, worin Ar für einen aromatischen oder heteroaromatischen Ring steht, der gegebenenfalls 1 oder 2 Substituenten aufweist, die unter Halogen, CN, C₁-C₆-Alkyl, C₁-C₆-Alkoxy und Phenyl ausgewählt sind und R^{a}, R^{b} unabhängig voneinander für Wasserstoff oder Methyl stehen oder gemeinsam ein Sauerstoffatom oder eine Methylidengruppe (=CH₂) bedeuten,
oder die Reste R¹Q und R²G zusammen für einen Rest der Formel A 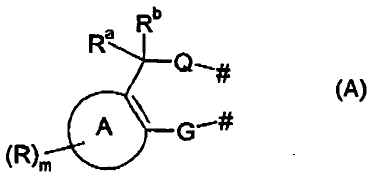 stehen, worin A für einen an die Doppelbindung kondensierten aromatischen oder heteroaromatischen Ring steht, m für 0, 1 oder 2 steht, die Reste R gleich oder verschieden sein können und unter Halogen, CN, C₁-C₆-Alkyl, C₁-C₆-Alkoxy,und Phenyl ausgewählt sind und R^{a}, R^{b} die zuvor genannten Bedeutungen aufweisen;
G für O, S oder NH steht;
Q für O, S oder NH steht;
q entsprechend der Wertigkeit und Ladung von M für 0, 1 oder 2 steht;
X, Y gleich oder verschieden sein können und jeweils für O, S, NH oder eine chemische Bindung stehen;
R^{1'}, R^{2'} gleich oder verschieden sein können und jeweils für C₁-C₆-Alkyl, C₃-C₆-Cycloalkyl, Aryl oder einen Rest Ar'-C(R^{a'},R^{b'})- stehen, worin Ar' die für Ar angegebenen Bedeutungen hat und R^{a'}, R^{b'} die für R^{a}, Rb angegebenen Bedeutungen aufweisen oder R^{1'}, R^{2'} gemeinsam mit X und Y für einen Rest der Formel A, wie zuvor definiert, stehen,
oder, wenn X für Sauerstoff steht, der Rest R^{1'} für einen Rest der Formel: 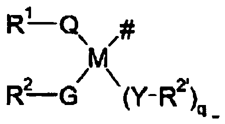 stehen kann, worin q, R¹, R², R^{2'}, Y, Q und G die zuvor genannten Bedeutungen haben und # die Bindung an X bedeutet.

7. Verfahren nach Anspruch 5, wobei die zu polymerisierenden Monomere, welche wenigstens eine Monomereinheit A und wenigstens eine Monomereinheit B aufweisen, wenigstens ein Monomer der allgemeinen Formel II umfassen: 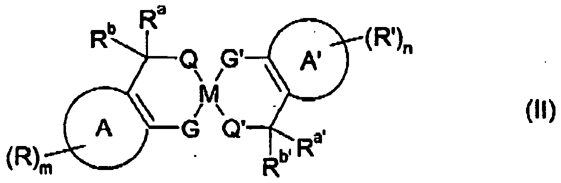 worin
M für ein Metall oder Halbmetall steht;
A und A' jeweils für einen an die Doppelbindung kondensierten aromatischen oder heteroaromatischen Ring stehen;
m und n unabhängig voneinander für 0, 1 oder 2 stehen;
G und G' gleich oder verschieden sind und unabhängig voneinander für O, S oder NH stehen;
Q und Q' gleich oder verschieden sind und unabhängig voneinander für O, S oder NH stehen;
R und R' gleich oder verschieden sind und unabhängig voneinander unter Halogen, CN, C₁-C₆-Alkyl, C₁-C₆-Alkoxy und Phenyl ausgewählt sind; und
R^{a}, R^{b}, R^{a'}, R^{b'} unabhängig voneinander ausgewählt sind unter Wasserstoff und Methyl oder R^{a} und R^{b} und/oder R^{a} und R^{b'} jeweils gemeinsam für ein Sauerstoffatom stehen.

8. Verfahren nach Anspruch 7, wobei die zu polymerisierenden Monomere, welche wenigstens eine Monomereinheit A und wenigstens eine Monomereinheit B aufweisen, ein erstes Monomer M1 und wenigstens ein zweites Monomer M2 umfassen, das sich zumindest in der Monomereinheit A von dem Monomer M1 unterscheidet, wobei das Monomer M1 ausgewählt ist unter den Monomeren der Formel II.

9. Verfahren nach Anspruch 7 oder 8, wobei die zu polymerisierenden Monomere, welche wenigstens eine Monomereinheit A und wenigstens eine Monomereinheit B aufweisen, ein erstes Monomer M1 und wenigstens ein zweites Monomer M2 umfassen, das sich zumindest in einer der Monomereinheiten A von dem Monomer M1 unterscheidet, wobei das Monomer M1 ausgewählt ist unter den Monomeren der Formel II und wobei das wenigstens eine weitere Monomer M2 ausgewählt ist unter den Monomeren der Formel III: 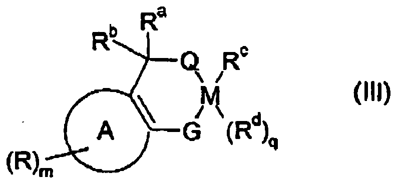 worin
M für ein Metall oder Halbmetall steht;
A für einen an die Doppelbindung kondensierten aromatischen oder heteroaromatischen Ring steht;
m für 0,1 oder 2 steht;
q entsprechend der Wertigkeit und Ladung von M, für 0, 1 oder 2 steht;
G für O, S oder NH steht;
Q für O, S oder NH steht;
R unabhängig voneinander unter Halogen, CN, C₁-C₆-Akyl, C₁-C₆-Alkoxy und Phenyl ausgewählt sind;
R^{a}, R^{b} unabhängig voneinander ausgewählt sind unter Wasserstoff und Methyl oder R^{a} und R^{b} gemeinsam für ein Sauerstoffatom oder eine Methylidengruppe stehen, und
R^{c}, R^{d} gleich oder verschieden sind und jeweils unter C₁-C₆-Akyl, C₃-C₆-Cycloalkyl und Aryl ausgewählt sind.

10. Verfahren nach Anspruch 7 oder 8, wobei die zu polymerisierenden Monomere, welche wenigstens eine Monomereinheit A und wenigstens eine Monomereinheit B aufweisen, ein erstes Monomer M1 und wenigstens ein zweites Monomer M2 umfassen, das sich zumindest in einer der Monomereinheiten A von dem Monomer M1 unterscheidet, wobei das Monomer M1 ausgewählt ist unter den Monomeren der Formel **II** und wobei das wenigstens eine weitere Monomer M2 ausgewählt ist unter aromatischen Verbindungen, die wenigstens zwei an gleiche oder verschiedene Phenylringe gebundene Trialkylsilyloxymethylgruppen und/oder Aryldialkylsilyloxymethylgruppen aufweisen.

11. Verfahren nach Anspruch 7 oder 8, wobei die zu polymerisierenden Monomere, welche wenigstens eine Monomereinheit A und wenigstens eine Monomereinheit B aufweisen, ein erstes Monomer M1 und wenigstens ein zweites Monomer M2 umfassen, das sich in den Monomereinheiten B und gegebenenfalls A von dem Monomer M1 unterscheidet, wobei das Monomer M1 ausgewählt ist unter den Monomeren der Formel II und wobei das wenigstens eine weitere Monomer M2 ausgewählt ist unter den Monomeren der Formel IV: 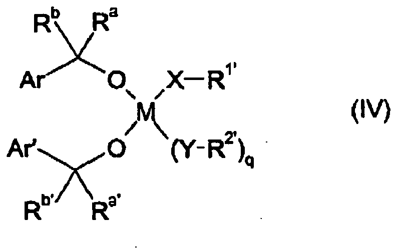 worin
M für ein Metall oder Halbmetall steht;
Ar, Ar' gleich oder verschieden sind und jeweils für einen aromatischen oder heteroaromatischen Ring stehen, der gegebenenfalls 1 oder 2 Substituenten aufweist, die unter Halogen, CN, C₁-C₆-Alkyl, C₁-C₆-Alkoxy und Phenyl ausgewählt sind;
R^{a}, R^{b}, R^{a'}, R^{b'} unabhängig voneinander ausgewählt sind unter Wasserstoff und Methyl oder R^{a} und R^{b} und/oder R^{a} und R^{b'} jeweils gemeinsam für ein Sauerstoffatom stehen;
q entsprechend der Wertigkeit von M für 0, 1 oder 2 steht;
X, Y gleich oder verschieden sein können und jeweils für O, S, NH oder eine chemische Bindung stehen; und
R^{1'}, R^{2'} gleich oder verschieden sein können und jeweils für C₁-C₆-Alkyl, C₃-C₆-Cycloalkyl, Aryl oder einen Rest Ar"-C(R^{a"},R^{b"})- stehen, worin Ar' die für Ar angegebenen Bedeutungen hat und R^{a"}, R^{b"} die für R^{a}, R^{b} angegebenen Bedeutungen aufweisen oder R^{1'}, R^{2'} gemeinsam mit X und Y für einen Rest der Formel A, wie zuvor definiert, stehen.

12. Verfahren nach Anspruch 6, wobei die zu polymerisierenden Monomere, welche wenigstens eine Monomereinheit A und wenigstens eine Monomereinheit B aufweisen, wenigstens ein Monomer der allgemeinen Formel IV, wie in Anspruch 11 definiert, umfassen.

13. Verfahren nach Anspruch 11, wobei die zu polymerisierenden Monomere, welche wenigstens eine Monomereinheit A und wenigstens eine Monomereinheit B aufweisen, wenigstens ein Monomer der allgemeinen Formel V umfassen: 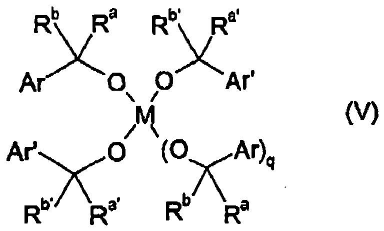 worin
M für ein Metall oder Halbmetall steht;
Ar, Ar' gleich oder verschieden sind und jeweils für einen aromatischen oder heteroaromatischen Ring stehen, der gegebenenfalls 1 oder 2 Substituenten aufweist, die unter Halogen, CN, C₁-C₆-Alkyl, C₁-C₆-Alkoxy und Phenyl ausgewählt sind;
R^{a}, R^{b}, R^{a'}, R^{b'} unabhängig voneinander ausgewählt sind unter Wasserstoff und Methyl oder R^{a} und R^{b} und/oder R^{a} und R^{b'} jeweils gemeinsam für ein Sauerstoffatom stehen; und
q entsprechend der Wertigkeit von M für 0, 1 oder 2 steht.

14. Verfahren nach Anspruch 13, wobei die zu polymerisierenden Monomere, welche wenigstens eine Monomereinheit A und wenigstens eine Monomereinheit B aufweisen, ein erstes Monomer M1 und wenigstens ein zweites Monomer M2 umfassen, das sich zumindest in der Monomereinheit A von dem Monomer M1 unterscheidet, wobei das Monomer M1 ausgewählt ist unter den Monomeren der Formel V und wobei das wenigstens eine weitere Monomer M2 ausgewählt ist unter den Monomeren der Formel V, die sich im (Halb-)Metall M von dem Monomer M1 unterscheiden.

15. Verfahren nach Anspruch 13, wobei die zu polymerisierenden Monomere, welche wenigstens eine Monomereinheit A und wenigstens eine Monomereinheit B aufweisen, ein erstes Monomer M1 und wenigstens ein zweites Monomer M2 umfassen, das sich in den Monomereinheiten A und B von dem Monomer M1 unterscheidet, wobei das Monomer M1 ausgewählt ist unter den Monomeren der Formel V und wobei das wenigstens eine weitere Monomer M2 ausgewählt ist unter den Monomeren der Formel III wie in Anspruch 9 definiert

16. Verfahren nach Anspruch 13, wobei die zu polymerisierenden Monomere, welche wenigstens eine Monomereinheit A und wenigstens eine Monomereinheit B aufweisen, ein erstes Monomer M1 und wenigstens ein zweites Monomer M2 umfassen, das sich zumindest in der Monomereinheit A von dem Monomer M1 unterscheidet, wobei das Monomer M1 ausgewählt ist unter den Monomeren der Formel V und wobei das wenigstens eine weitere Monomer M2 ausgewählt ist unter den Monomeren der Formel VI: 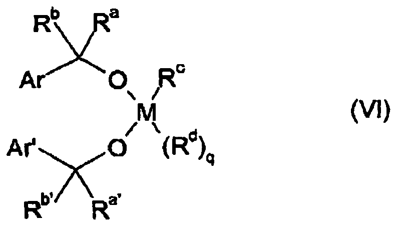 worin
M für ein Metall oder Halbmetall steht;
Ar, Ar' gleich oder verschieden sind und jeweils für einen aromatischen oder heteroaromatischen Ring stehen, der gegebenenfalls 1 oder 2 Substituenten aufweist, die unter Halogen, CN, C₁-C₆-Alkyl, C₁-C₆-Alkoxy und Phenyl ausgewählt sind;
R^{a}, R^{b}, R^{a'}, R^{b'} unabhängig voneinander ausgewählt sind unter Wasserstoff und Methyl oder R^{a} und R^{b} und/oder R^{a} und R^{b'} jeweils gemeinsam für ein Sauerstoffatom stehen;
q entsprechend der Wertigkeit von M für 0, 1 oder 2 steht; und
R^{c}, R^{d} gleich oder verschieden sind und jeweils unter C₁-C₆-Alkyl, C₃-C₆-Cycloalkyl und Aryl ausgewählt sind.

17. Nanokompositmaterial aus
a) wenigstens einer anorganischen oder metallorganischen Phase; und
b) einer organischen Polymerphase;
worin die Phasendomämen der anorganischen oder metallorganischen Phase und die Phasendomänen der organische Polymerphase eine co-kontinuierliche Anordnung aufweisen und die Abstände zwischen benachbarten Domänen identischer Phasen maximal 10 nm betragen,
wobei das Nanokompositmatereial erhältlich durch ein Verfahren nach einem der vorhergehenden Ansprüche.

18. Nanoporöses anorganisches Material auf Basis eines (Halb-)Metalloxids oder Nitrids des (Halb-)Metalls M, erhältlich durch oxidatives Entfernen der organischen Bestandteile aus dem Kompositmaterial nach Anspruch 17.

19. Kohlenstoffhaltiges Nanokompositmaterial
a) eine Kohlenstoffphase C;
b) und wenigstens eine anorganische Phase eines (Halb-)Metalloxids oder Nitrids des (Halb-)Metalls M;
erhältlich durch Calcinieren des Komposftmaterials aus Anspruch 17 unter weitgehendem oder vollständigem Ausschluss von Sauerstoff,
worin die Kohlenstoffphase C und die anorganische Phase im Wesentlichen co-kontinuierliche Phasendomänen bilden, wobei der mittlere Abstand zweier benachbarter Domänen identischer Phasen maximal 10 nm beträgt.

## Claims

1. A process for producing a nanocomposite material from
a) at least one inorganic or organometallic metal phase; and
b) an organic polymer phase;
comprising the polymerization of at least one monomer which has
- at least one first polymerizable monomer unit A which has a metal or semimetal M, and
- at least one second polymerizable organic monomer unit B which is joined to the polymerizable unit A via a covalent chemical bond,
under polymerization conditions under which both the polymerizable monomer unit A and the polymerizable unit B polymerize with breakage of the bond between A and B,
the monomers to be polymerized comprising a first monomer M1 and at least one second monomer M2 which differs at least in one of the monomer units A and B from the monomer M1, or
the monomers to be polymerized comprising, as well as the at least one monomer to be polymerized, at least one further, different monomer which does not have a monomer unit A and is copolymerizable with the monomer unit B.

2. The process according to claim 1, wherein metal or semimetal of the monomer unit A is selected from B, Al, Si, Ti, Zr, Hf, Ge, Sn, Pb, V, As, Sb, Bi, and mixtures thereof.

3. The process according to either of the preceding claims, wherein the metal or semimetal M comprises silicon to an extent of at least 90 mol%, based on the total amount of M.

4. The process according to any of the preceding claims, wherein the monomers to be polymerized, which have at least one monomer unit A and at least one monomer unit B, comprise a first monomer M1 and at least one second monomer M2 which differs from the monomer M1 at least in one of the monomer units A and B, and the molar ratio of the monomers M1 and M2 relative to one another is in the range from 5:95 to 95:5.

5. The process according to any of the preceding claims, wherein the monomers to be polymerized, which have at least one monomer unit A and at least one monomer unit B, comprise a first monomer M1 and at least one second monomer M2 which differs from the monomer M1 at least in the monomer unit A.

6. The process according to any of the preceding claims, wherein the monomers which have at least one monomer unit A and at least one monomer unit B are described by the general formula I: 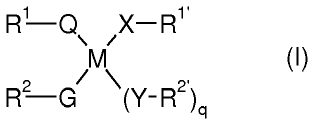 in which
M is a metal or semimetal;
R¹, R² may be the same or different and are each an Ar-C(R^{a},R^{b})- radical in which Ar is an aromatic or heteroaromatic ring which optionally has 1 or 2 substituents selected from halogen, CN, C₁-C₆-alkyl, C₁-C₆-alkoxy and phenyl, and R^{a}, R^{b} are each independently hydrogen or methyl or together are an oxygen atom or a methylidene group (=CH₂),
or the R¹Q and R²G radicals together are a radical of the formula A 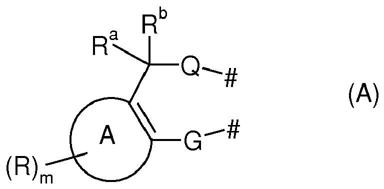 in which A is an aromatic or heteroaromatic ring fused to the double bond, m is 0, 1 or 2, the R radicals may be the same or different and are selected from halogen, CN, C₁-C₆-alkyl, C₁-C₆-alkoxy and phenyl, and R^{a}, R^{b} are each as defined above;
G is O, S or NH;
Q is O, S or NH;
q according to the valency and charge of M is 0, 1 or 2;
X, Y may be the same or different and are each O, S, NH or a chemical bond;
R^{1'}, R^{2'} may be the same or different and are each C₁-C₆-alkyl, C₃-C₆-cycloalkyl, aryl or an Ar'-C(R^{a'},R^{b'})- radical in which Ar' is as defined for Ar and R^{a'}, R^{b'} are each as defined for R^{a}, R^{b}, or R^{1'}, R^{2'} together with X and Y are a radical of the formula A, as defined above,
or, when X is oxygen, the R^{1'} radical may be a radical of the formula: 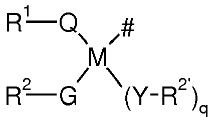 in which q, R¹, R², R^{2'}, Y, Q and G are each as defined above and # means the bond to X.

7. The process according to claim 5, wherein the monomers to be polymerized, which have at least one monomer unit A and at least one monomer unit B, comprise at least one monomer of the general formula II: 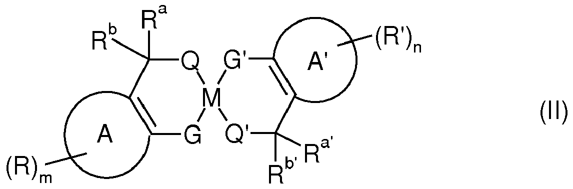 in which
M is a metal or semimetal;
A and A' are each an aromatic or heteroaromatic ring fused to the double bond;
m and n are each independently 0, 1 or 2;
G and G' are the same or different and are each independently O, S or NH;
Q and Q' are the same or different and are each independently O, S or NH;
R and R' are the same or different and are each independently selected from halogen, CN, C₁-C₆-alkyl, C₁-C₆-alkoxy and phenyl; and
R^{a}, R^{b}, R^{a'}, R^{b'} are each independently selected from hydrogen and methyl, or R^{a} and R^{b} and/or R^{a} and R^{b'} in each case together are an oxygen atom.

8. The process according to claim 7, wherein the monomers to be polymerized, which have at least one monomer unit A and at least one monomer unit B, comprise a first monomer M1 and at least one second monomer M2 which differs at least in the monomer unit A from the monomer M1, the monomer M1 being selected from the monomers of the formula II.

9. The process according to claim 7 or 8, wherein the monomers to be polymerized, which have at least one monomer unit A and at least one monomer unit B, comprise a first monomer M1 and at least one second monomer M2 which differs in at least one of the monomer units A from the monomer M1, the monomer M1 being selected from the monomers of the formula II and the at least one further monomer M2 being selected from the monomers of the formula III: 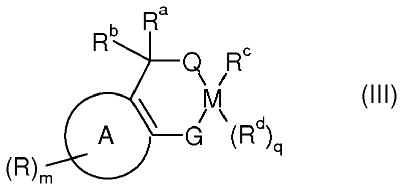 in which
M is a metal or semimetal;
A is an aromatic or heteroaromatic ring fused to the double bond;
m is 0, 1 or 2;
q according to the valency and charge of M is 0, 1 or 2;
G is O, S or NH;
Q is O, S or NH;
R are selected independently from halogen, CN, C₁-C₆-alkyl, C₁-C₆-alkoxy and phenyl;
R^{a}, R^{b} are each independently selected from hydrogen and methyl, or R^{a} and R^{b} together are an oxygen atom or a methylidene group, and
R^{c}, R^{d} are the same or different and are each selected from C₁-C₆-alkyl, C₃-C₆-cycloalkyl and aryl.

10. The process according to claim 7 or 8, wherein the monomers to be polymerized, which have at least one monomer unit A and at least one monomer unit B, comprise a first monomer M1 and at least one second monomer M2 which differs from the monomer M1 at least in one of the monomer units A, the monomer M1 being selected from the monomers of the formula II, and the at least one further monomer M2 being selected from aromatic compounds which have at least two trialkylsilyloxymethyl groups and/or aryldialkylsilyloxymethyl groups bonded to the same or different phenyl rings.

11. The process according to claim 7 or 8, wherein the monomers to be polymerized, which have at least one monomer unit A and at least one monomer unit B, comprise a first monomer M1 and at least one second monomer M2 which differs in the monomer units B and optionally A from the monomer M1, the monomer M1 being selected from the monomers of the formula II and the at least one further monomer M2 being selected from the monomers of the formula IV: 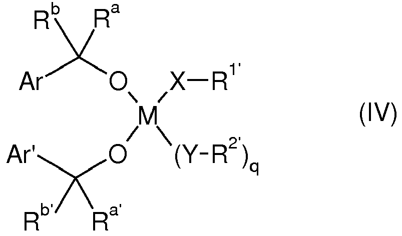 in which:
M is a metal or semimetal;
Ar, Ar' are the same or different and are each an aromatic or heteroaromatic ring which optionally has 1 or 2 substituents selected from halogen, CN, C₁-C₆-alkyl, C₁-C₆-alkoxy and phenyl;
R^{a}, R^{b}, R^{a'}, R^{b'} are each independently selected from hydrogen and methyl, or R^{a} and R^{b} and/or R^{a} and R^{b'} in each case together are an oxygen atom;
q according to the valency of M is 0, 1 or 2;
X, Y may be the same or different and are each O, S, NH or a chemical bond; and
R^{1'}, R^{2'} may be the same or different and are each C₁-C₆-alkyl, C₃-C₆-cycloalkyl, aryl or an Ar"-C(R^{a"},R^{b"})- radical in which Ar' is as defined for Ar and R^{a"}, R^{b"} are each as defined for Ra, R^{b}, or R^{1'}, R^{2'} together with X and Y are a radical of the formula A as defined above.

12. The process according to claim 6, wherein the monomers to be polymerized, which have at least one monomer unit A and at least one monomer unit B, comprise at least one monomer of the general formula IV as defined in claim 11.

13. The process according to claim 11, wherein the monomers to be polymerized, which have at least one monomer unit A and at least one monomer unit B, comprise at least one monomer of the general formula V: 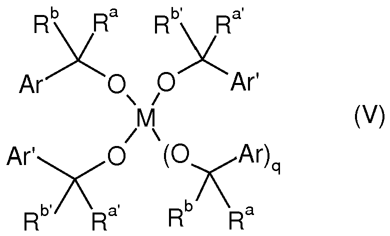 in which
M is a metal or semimetal;
Ar, Ar' are the same or different and are each an aromatic or heteroaromatic ring which optionally has 1 or 2 substituents selected from halogen, CN, C₁-C₆-alkyl, C₁-C₆-alkoxy and phenyl;
R^{a}, R^{b}, R^{a'}, R^{b'} are each independently selected from hydrogen and methyl, or R^{a} and R^{b} and/or R^{a} and R^{b'} in each case together are an oxygen atom; and
q according to the valency of M is 0, 1 or 2.

14. The process according to claim 13, wherein the monomers to be polymerized, which have at least one monomer unit A and at least one monomer unit B, comprise a first monomer M1 and at least one second monomer M2 which differs at least in the monomer unit A from the monomer M1, the monomer M1 being selected from the monomers of the formula V and the at least one further monomer M2 being selected from the monomers of the formula V which differ in the (semi)metal M from the monomer M1.

15. The process according to claim 13, wherein the monomers to be polymerized, which have at least one monomer unit A and at least one monomer unit B, comprise a first monomer M1 and at least one second monomer M2 which differs in the monomer units A and B from the monomer M1, the monomer M1 being selected from the monomers of the formula V and the at least one further monomer M2 being selected from the monomers of the formula III as defined in claim 9.

16. The process according to claim 13, wherein the monomers to be polymerized, which have at least one monomer unit A and at least one monomer unit B, comprise a first monomer M1 and at least one second monomer M2 which differs at least in the monomer unit A from the monomer M1, the monomer M1 being selected from the monomers of the formula V and the at least one further monomer M2 being selected from the monomers of the formula VI: 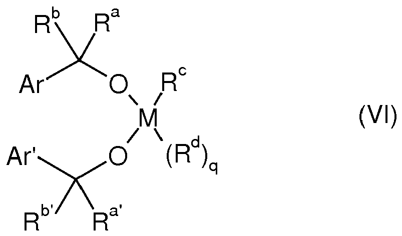 in which
M is a metal or semimetal;
Ar, Ar' are the same or different and are each an aromatic or heteroaromatic ring which optionally has 1 or 2 substituents selected from halogen, CN, C₁-C₆-alkyl, C₁-C₆-alkoxy and phenyl;
R^{a}, R^{b}, R^{a'}, R^{b'} are each independently selected from hydrogen and methyl, or R^{a} and R^{b} and/or R^{a} and R^{b'} in each case together are an oxygen atom; and
q according to the valency of M is 0, 1 or 2; and
R^{c}, R^{d} are the same or different and are each selected from C₁-C₆-alkyl, C₃-C₆-cycloalkyl and aryl.

17. A nanocomposite material composed of
a) at least one inorganic or organometallic phase; and
b) an organic polymer phase;
in which the phase domains of the inorganic or organometallic phase and the phase domains of the organic polymer phase have a co-continuous arrangement and the distances between adjacent domains of identical phases are not more than 10 nm,
said nanocomposite material being obtainable by a process according to any of the preceding claims.

18. A nanoporous inorganic material based on a (semi)metal oxide or nitride of the (semi)metal M, obtainable by oxidatively removing the organic constituents from the composite material according to claim 17.

19. A carbon-containing nanocomposite material
a) a carbon phase C;
b) and at least one inorganic phase of a (semi)metal oxide or nitride of the (semi)metal M;
obtainable by calcining the composite material from claim 17 under substantial or complete exclusion of oxygen, in which the carbon phase C and the inorganic phase form essentially co-continuous phase domains, the mean distance between two adjacent domains of identical phases being not more than 10 nm.

## Revendications

1. Procédé de fabrication d'un matériau nanocomposite constitué par
a) au moins une phase inorganique ou métallo-organique ; et
b) une phase polymère organique ;
comprenant la polymérisation d'au moins un monomère qui comprend
- au moins une première unité monomère polymérisable A, qui comprend un métal ou semi-métal M, et
- au moins une seconde unité monomère organique polymérisable B, qui est reliée par une liaison chimique covalente avec l'unité polymérisable A,
dans des conditions de polymérisation dans lesquelles aussi bien l'unité monomère polymérisable A que l'unité polymérisable B polymérisent avec rupture de la liaison entre A et B,
les monomères à polymériser comprenant un premier monomère M1 et au moins un second monomère M2, qui diffère du monomère M1 en au moins une des unités monomères A ou B, ou
les monomères à polymériser comprenant en plus du ou des monomères à polymériser au moins un autre monomère différent sans unité monomère A, qui est copolymérisable avec l'unité monomère B.

2. Procédé selon la revendication 1, dans lequel le métal ou semi-métal de l'unité monomère A est choisi parmi B, Al, Si, Ti, Zr, Hf, Ge, Sn, Pb, V, As, Sb, Bi et leurs mélanges.

3. Procédé selon l'une quelconque des revendications précédentes, dans lequel le métal ou semi-métal M comprend au moins 90 % en moles de silicium, par rapport à la quantité totale de M.

4. Procédé selon l'une quelconque des revendications précédentes, dans lequel les monomères à polymériser qui comprennent au moins une unité monomère A et au moins une unité monomère B comprennent un premier monomère M1 et au moins un second monomère M2, qui diffère du monomère M1 en au moins une des unités monomères A ou B, le rapport molaire entre les monomères M1 et M2 se situant dans la plage allant de 5:95 à 95:5.

5. Procédé selon l'une quelconque des revendications précédentes, dans lequel les monomères à polymériser qui comprennent au moins une unité monomère A et au moins une unité monomère B comprennent un premier monomère M1 et au moins un second monomère M2, qui diffère du monomère M1 au moins en l'unité monomère A.

6. Procédé selon l'une quelconque des revendications précédentes, dans lequel les monomères qui comprennent au moins une unité monomère A et au moins une unité monomère B sont décrits par la formule générale I : 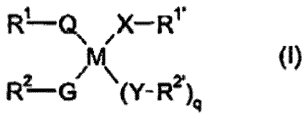 dans laquelle
M représente un métal ou semi-métal ;
R¹, R² peuvent être identiques ou différents, et représentent chacun un radical Ar-C(R^{a},R^{b})-, Ar représentant un cycle aromatique ou hétéroaromatique qui comprend éventuellement 1 ou 2 substituants choisis parmi halogène, CN, alkyle en C₁-C₆, alcoxy en C₁-C₆ et phényle, et R^{a}, R^{b} représentant indépendamment l'un de l'autre hydrogène ou méthyle ou signifiant ensemble un atome d'oxygène ou un groupe méthylidène (=CH2),
ou les radicaux R¹Q et R²G représentent ensemble un radical de formule A 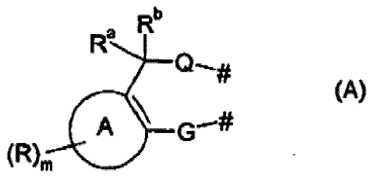 dans laquelle A représente un cycle aromatique ou hétéroaromatique condensé sur la double liaison, m représente 0, 1 ou 2, les radicaux R peuvent être identiques ou différents, et sont choisis parmi halogène, CN, alkyle en C₁-C₆, alcoxy en C₁-C₆ et phényle, et R^{a}, R^{b} présentent les significations données précédemment ;
G représente 0, S ou NH ;
Q représente 0, S ou NH ;
q représente 0, 1 ou 2 en fonction de la valence et de la charge de M ;
X, Y peuvent être identiques ou différents, et représentent chacun 0, S, NH ou une liaison chimique ;
R^{1'}, R^{2'} peuvent être identiques ou différents, et représentent chacun alkyle en C₁-C₆, cycloalkyle en C₃-C₆, aryle ou un radical Ar'-C(R^{a'},R^{b'})-, Ar' ayant les significations données pour Ar et R^{a'}, R^{b'} présentant les significations données pour R^{a}, R^{b}, ou R^{1'}, R^{2'} représentent avec X et Y un radical de formule A, telle que définie précédemment,
ou, lorsque X représente oxygène, le radical R^{1'} représente un radical de formule : 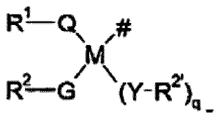 dans laquelle q, R¹, R², R^{2'}, Y, Q et G ont les significations données précédemment et # signifie la liaison à X.

7. Procédé selon la revendication 5, dans lequel les monomères à polymériser qui comprennent au moins une unité monomère A et au moins une unité monomère B comprennent au moins un monomère de formule générale II : 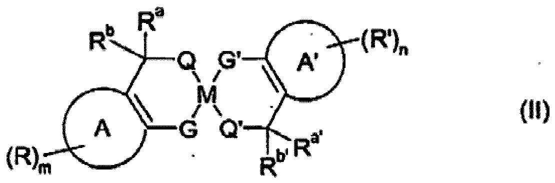 dans laquelle
M représente un métal ou semi-métal ;
A et A' représentent chacun un cycle aromatique ou hétéroaromatique condensé sur la double liaison ;
m et n représentent indépendamment l'un de l'autre 0, 1 ou 2 ;
G et G' sont identiques ou différents, et représentent indépendamment l'un de l'autre 0, S ou NH ;
Q et Q' sont identiques ou différents, et représentent indépendamment l'un de l'autre 0, S ou NH ;
R et R' sont identiques ou différents, et sont choisis indépendamment l'un de l'autre parmi halogène, CN, alkyle en C₁-C₆, alcoxy en C₁-C₆ et phényle ; et
R^{a}, R^{b}, R^{a'}, R^{b'} sont choisis indépendamment les uns des autres parmi hydrogène et méthyle, ou R^{a} et R^{b} et/ou R^{a}
et R^{b'} représentent respectivement ensemble un atome d'oxygène.

8. Procédé selon la revendication 7, dans lequel les monomères à polymériser qui comprennent au moins une unité monomère A et au moins une unité monomère B comprennent un premier monomère M1 et au moins un second monomère M2, qui diffère du monomère M1 au moins en l'unité monomère A, le monomère M1 étant choisi parmi les monomères de formule II.

9. Procédé selon la revendication 7 ou 8, dans lequel les monomères à polymériser qui comprennent au moins une unité monomère A et au moins une unité monomère B comprennent un premier monomère M1 et au moins un second monomère M2, qui diffère du monomère M1 au moins en une des unités monomères A, le monomère M1 étant choisi parmi les monomères de formule II, et le ou les monomères M2 supplémentaires étant choisis parmi les monomères de formule III : 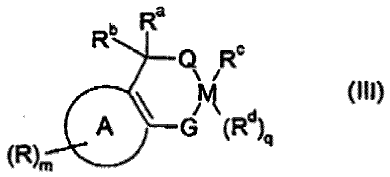 dans laquelle
M représente un métal ou semi-métal ;
A représente un cycle aromatique ou hétéroaromatique condensé sur la double liaison ;
m représente 0, 1 ou 2 ;
q représente 0, 1 ou 2 en fonction de la valence et de la charge de M ;
G représente 0, S ou NH ;
Q représente 0, S ou NH ;
les R sont choisis indépendamment les uns des autres parmi halogène, CN, alkyle en C₁-C₆, alcoxy en C₁-C₆ et phényle ;
R^{a}, R^{b} sont choisis indépendamment l'un de l'autre parmi hydrogène et méthyle, ou R^{a} et R^{b} représentent ensemble un atome d'oxygène ou un groupe méthylidène, et
R^{c}, R^{d} sont identiques ou différents, et sont chacun choisis parmi alkyle en C₁-C₆, cycloalkyle en C₃-C₆ et aryle.

10. Procédé selon la revendication 7 ou 8, dans lequel les monomères à polymériser qui comprennent au moins une unité monomère A et au moins une unité monomère B comprennent un premier monomère M1 et au moins un second monomère M2, qui diffère du monomère M1 au moins en une des unités monomères A, le monomère M1 étant choisi parmi les monomères de formule II, et le ou les monomères M2 supplémentaires étant choisis parmi les composés aromatiques qui comprennent au moins deux groupes trialkylsilyloxyméthyle et/ou aryldialkylsilyloxyméthyle reliés à des cycles phényle identiques ou différents.

11. Procédé selon la revendication 7 ou 8, dans lequel les monomères à polymériser qui comprennent au moins une unité monomère A et au moins une unité monomère B comprennent un premier monomère M1 et au moins un second monomère M2, qui diffère du monomère M1 en les unités monomères B et éventuellement A, le monomère M1 étant choisi parmi les monomères de formule II, et le ou les monomères M2 supplémentaires étant choisis parmi les monomères de formule IV : 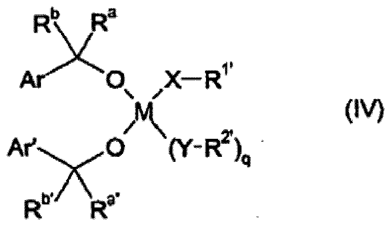 dans laquelle
M représente un métal ou semi-métal ;
Ar, Ar' sont identiques ou différents, et représentent chacun un cycle aromatique ou hétéroaromatique qui comprend éventuellement 1 ou 2 substituants choisis parmi halogène, CN, alkyle en C₁-C₆, alcoxy en C₁-C₆ et phényle ;
R^{a}, R^{b}, R^{a'}, R^{b'} et R^{b'} sont choisis indépendamment les uns des autres parmi hydrogène et méthyle, ou R^{a} et R^{b} et/ou R^{a} représentent respectivement ensemble un atome d'oxygène ;
q représente 0, 1 ou 2 en fonction de la valence de M ;
X, Y peuvent être identiques ou différents, et représentent chacun 0, S, NH ou une liaison chimique ; et
R^{1'}, R^{2'} peuvent être identiques ou différents, et représentent chacun alkyle en C₁-C₆, cycloalkyle en C₃-C₆, aryle ou un radical Ar"-C (R^{a"}, Rb^{"}) -, Ar' ayant les significations données pour Ar et R^{a"}, R^{b"} présentant les significations données pour R^{a}, R^{b}, ou R^{1'}, R^{2'} représentent avec X et Y un radical de formule A, telle que définie précédemment.

12. Procédé selon la revendication 6, dans lequel les monomères à polymériser qui comprennent au moins une unité monomère A et au moins une unité monomère B comprennent au moins un monomère de formule générale IV, telle que définie dans la revendication 11.

13. Procédé selon la revendication 11, dans lequel les monomères à polymériser qui comprennent au moins une unité monomère A et au moins une unité monomère B comprennent au moins un monomère de formule générale V : 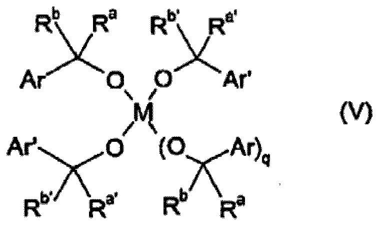 dans laquelle
M représente un métal ou semi-métal ;
Ar, Ar' sont identiques ou différents, et représentent chacun un cycle aromatique ou hétéroaromatique qui comprend éventuellement 1 ou 2 substituants choisis parmi halogène, CN, alkyle en C₁-C₆, alcoxy en C₁-C₆ et phényle ;
R^{a}, R^{b}, R^{a'}, R^{b'} sont choisis indépendamment les uns des autres parmi hydrogène et méthyle, ou R^{a} et R^{b} et/ou R^{a} et R^{b'} représentent respectivement ensemble un atome d'oxygène ;
q représente 0, 1 ou 2 en fonction de la valence de M.

14. Procédé selon la revendication 13, dans lequel les monomères à polymériser qui comprennent au moins une unité monomère A et au moins une unité monomère B comprennent un premier monomère M1 et au moins un second monomère M2, qui diffère du monomère M1 au moins en l'unité monomère A, le monomère M1 étant choisi parmi les monomères de formule V et le ou les monomères M2 supplémentaires étant choisis parmi les monomères de formule V, qui diffèrent du monomère M1 en le (semi-)métal M.

15. Procédé selon la revendication 13, dans lequel les monomères à polymériser qui comprennent au moins une unité monomère A et au moins une unité monomère B comprennent un premier monomère M1 et au moins un second monomère M2, qui diffère du monomère M1 en les unités monomères A et B, le monomère M1 étant choisi parmi les monomères de formule V et le ou les monomères M2 supplémentaires étant choisis parmi les monomères de formule III telle que définie dans la revendication 9.

16. Procédé selon la revendication 13, dans lequel les monomères à polymériser qui comprennent au moins une unité monomère A et au moins une unité monomère B comprennent un premier monomère M1 et au moins un second monomère M2, qui diffère du monomère M1 au moins en l'unité monomère A, le monomère M1 étant choisi parmi les monomères de formule V et le ou les monomères M2 supplémentaires étant choisis parmi les monomères de formule VI : 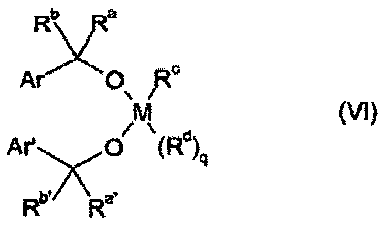 dans laquelle
M représente un métal ou semi-métal ;
Ar, Ar' sont identiques ou différents, et représentent chacun un cycle aromatique ou hétéroaromatique qui comprend éventuellement 1 ou 2 substituants choisis parmi halogène, CN, alkyle en C₁-C₆, alcoxy en C₁-C₆ et phényle ;
R^{a}, R^{b}, R^{a'}, R^{b'} sont choisis indépendamment les uns des autres parmi hydrogène et méthyle, ou R^{a} et R^{b} et/ou R^{a} et R^{b'} représentent respectivement ensemble un atome d'oxygène ;
q représente 0, 1 ou 2 en fonction de la valence de M ;
R^{c}, R^{d} sont identiques ou différents, et sont chacun choisis parmi alkyle en C₁-C₆, cycloalkyle en C₃-C₆ et aryle.

17. Matériau nanocomposite, constitué par :
a) au moins une phase inorganique ou métallo-organique ; et
b) une phase polymère organique ;
les domaines de phase de la phase inorganique ou métallo-organique et les domaines de phase de la phase polymère organique présentant un agencement co-continu et les distances entre des domaines voisins de phases identiques étant d'au plus 10 nm,
le matériau nanocomposite pouvant être obtenu par un procédé selon l'une quelconque des revendications précédentes.

18. Matériau inorganique nanoporeux à base d'un oxyde de (semi-)métal ou d'un nitrure du (semi-)métal M, pouvant être obtenu par élimination oxydative des constituants organiques du matériau composite selon la revendication 17.

19. Matériau nanocomposite contenant du carbone:
a) une phase carbonée C ; et
b) au moins une phase inorganique d'un oxyde de (semi-)métal ou d'un nitrure du (semi-)métal M ; pouvant être obtenu par calcination du matériau composite selon la revendication 17 avec exclusion essentielle ou totale de l'oxygène,
la phase carbonée C et la phase inorganique formant des domaines de phase essentiellement co-continus, la distance moyenne entre deux domaines voisins de phases identiques étant d'au plus 10 nm.
